(19) Europäisches Patentamt / European Patent Office / Office européen des brevets

(11) **EP 3 889 803 B1**

(12) **EUROPEAN PATENT SPECIFICATION**

(45) Date of publication and mention
of the grant of the patent:
**23.10.2024   Bulletin 2024/43**

(21) Application number: **19888580.8**

(22) Date of filing: **22.11.2019**

(51) International Patent Classification (IPC):
*G06V 20/40* *(2022.01)*        *G06V 10/44* *(2022.01)*
*G06V 10/764* *(2022.01)*        *G06V 10/82* *(2022.01)*

(52) Cooperative Patent Classification (CPC):
**G06V 20/41; G06V 10/454; G06V 10/764;**
**G06V 10/82; G06V 20/46;** G10L 25/30; G10L 25/51

(86) International application number:
**PCT/CN2019/120200**

(87) International publication number:
**WO 2020/108396 (04.06.2020 Gazette 2020/23)**

(54) **VIDEO CLASSIFICATION METHOD AND SERVER**

VIDEOKLASSIFIZIERUNGSVERFAHREN UND SERVER

PROCÉDÉ DE CLASSEMENT DE VIDÉO ET SERVEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.11.2018   CN 201811445857**

(43) Date of publication of application:
**06.10.2021   Bulletin 2021/40**

(73) Proprietor: **Tencent Technology (Shenzhen)
Company Limited
Shenzhen, Guangdong, 518057 (CN)**

(72) Inventor: **MA, Lin
Shenzhen, Guangdong 518057 (CN)**

(74) Representative: **Eisenführ Speiser
Patentanwälte Rechtsanwälte PartGmbB
Postfach 31 02 60
80102 München (DE)**

(56) References cited:
CN-A- 102 073 631        CN-A- 102 436 483
CN-A- 106 503 723        CN-A- 109 522 450
US-A1- 2018 089 203        US-A1- 2018 336 466

• **KANG SUNGHUN ET AL: "Pivot Correlational
Neural Network for Multimodal Video
Categorization", 9 October 2018, ADVANCES IN
DATABASES AND INFORMATION SYSTEMS;
[LECTURE NOTES IN COMPUTER SCIENCE;
LECT.NOTES COMPUTER], SPRINGER
INTERNATIONAL PUBLISHING, CHAM, PAGE(S)
402 - 417, ISBN: 978-3-319-10403-4, XP047500437**

**Description**

RELATED APPLICATION

This application claims priority to Chinese Patent Application No. 2018114458579, filed with the China National Intellectual Property Administration on November 29, 2018 and entitled "METHOD FOR CLASSIFYING VIDEO, AND SERVER".

FIELD OF THE TECHNOLOGY

The present disclosure relates to the field of artificial intelligence, and in particular, to a method for classifying a video and a server.

BACKGROUND OF THE APPLICATION

Various types of multimedia information emerge with rapid development of network multimedia technology. A growing number of users are getting used to watching videos via Internet. Generally, the videos are classified to facilitate a user selecting desired content from a large quantity of videos. Therefore, video classification plays a critical role in management and interest-based recommendation of the videos.

A conventional method for classifying videos is as follows. First, a feature is extracted from each video frame of a video that is to be labeled. Then, the features of a frame level are transformed into a feature of a video level, through a feature-averaging manner. Finally, the video-level features are transmitted to a classifying network for classification.

In the conventional method, changes in other dimensions are not considered as an influence on the video-frame transformation, and thereby the feature-averaging manner is limited in transforming the frame-level features. Hence, video content cannot be well expressed in the features, reducing accuracy of video classification.

KANG SUNGHUN ET AL describe in "Pivot Correlational Neural Network for Multimodal Video Categorization", 9 October 2018 (2018-10-09), ADVANCES IN DATABASES AND INFORMATION SYSTEMS, PAGE(S) 402 - 417, XP047500437, ISBN: 978-3-319-10403-4 a Pivot Correlational Neural for multimodal video categorization by maximizing the correlation between the hidden states as well as the predictions of the modal-agnostic pivot stream and modal-specific streams in the network.

SUMMARY

The invention is set out in the appended set of claims.

A method for classifying a video and a server are provided according to embodiments of the present disclosure. Temporal variations of not only visual features but also audio features are taken into account in video classification. Thereby, video content can be better represented, and both accuracy and an effect of video classification can be improved.

In view of the above, a method for classifying a video is provided according to a first aspect of the present disclosure. The method includes:

obtaining a video that is to be processed, where the video includes at least one video frame, and each video frame corresponds to a moment;

obtaining a sequence of visual-signal features that corresponds to the video, where the sequence of visual-signal features includes at least one visual-signal feature, and each visual-signal feature corresponds to a moment;

obtaining a sequence of acoustic-signal features that corresponds to the sequence of visual-signal features, where the sequence of acoustic-signal features includes at least one acoustic-signal feature, and each acoustic-signal feature corresponds to a moment;

generating a sequence of target-signal features, according to the sequence of visual-signal features and the sequence of acoustic-signal features; and

obtaining a classification predicting result corresponding to the sequence of target-signal features, where the classification predicting result is configured to predict a category of the video.

A server is provided according to another aspect of the present disclosure. The server includes:

an obtaining module, configured to:

> obtain a video that is to be processed, where the video includes at least one video frame, and each video frame corresponds to a moment;

> obtain a sequence of visual-signal features that corresponds to the video, where the sequence of visual-signal features includes at least one visual-signal feature, and each visual-signal feature corresponds to a moment;

> obtain a sequence of acoustic-signal features that corresponds to the sequence of visual-signal features, where the sequence of acoustic-signal features includes at least one acoustic-signal feature, and each acoustic-signal feature corresponds to a moment; and

a generation module, configured to generate a sequence of target-signal features, according to the sequence of visual-signal features and the sequence of acoustic-signal features that are obtained by the obtaining module;

where the obtaining module is further configured to obtain a classification predicting result corresponding to the sequence of target-signal features that is generated by the generation module, and the classification predicting result is configured to predict a category of the video.

The obtaining module is configured to:

obtain the visual-signal feature of each video frame in the video through a first sub-model in a predicting model for video classification, where the first sub-model includes a convolutional neural network (CNN) model; and

generate the sequence of visual-signal features that corresponds to the video, according to the visual-signal feature of each video frame.

The obtaining module is configured to:

obtain the acoustic-signal feature of each visual-signal feature in the sequence of visual-signal features through a second sub-model in the predicting model, where the second sub-model includes a recurrent neural model based on a gated recurrent unit (GRU); and

generate the sequence of acoustic-signal features that corresponds to the sequence of visual-signal features, according to the acoustic-signal feature of each visual-signal feature.

In an optional embodiment, the obtaining module may be configured to:

obtain the visual-signal feature at a first moment and a hidden-state visual-signal feature at a second moment, where the second moment is previous to and adjacent to the first moment;

obtain a hidden-state visual-signal feature at the first moment through the second sub-model, where the hidden-state visual-signal feature at the first moment corresponds to the visual-signal feature at the first moment, and corresponds to the hidden-state visual-signal feature at the second moment;

obtain a hidden-state acoustic-signal feature at the second moment;

obtain a hidden-state acoustic-signal feature at the first moment through the second sub-model, where the hidden-state acoustic-signal feature at the first moment corresponds to the hidden-state acoustic-signal feature at the second moment, and corresponds to the hidden-state visual-signal feature at the first moment; and

generate the acoustic-signal feature at the first moment, according to the hidden-state acoustic-signal feature at the first moment.

In an optional embodiment, the obtaining module may be configured to calculate the hidden-state visual-signal feature at the first moment through a following equation:

$$h_t = GRU\left(x_t, h_{t-1}\right) \quad for\, t \in \left[1, T\right]$$,

where $h_t$ represents the hidden-state visual-signal feature at the first moment, $GRU(\ )$ represents a GRU function, $x_t$ represents the visual-signal feature at the first moment, $h_{t-1}$ represents the hidden-state visual-signal feature at the second moment, $t$ represents the first moment, and $T$ represents a quantity of all moments for the video.

In an optional embodiment, the obtaining module may be configured to calculate the hidden-state acoustic-signal feature at the first moment through a following equation:

$$y_t = GRU\left(h_t, y_{t-1}\right) \quad for\, t \in \left[1, T\right]$$,

where $y_t$ represents the hidden-state acoustic-signal feature at the first moment, $GRU(\ )$ represents a GRU function, $h_t$ represents the hidden-state visual-signal feature at the first moment, $y_{t-1}$ represents the hidden-state acoustic-signal feature at the second moment, $t$ represents the first moment, and $T$ represents a quantity of all moments for the video.

In an optional embodiment, the obtaining module may be configured to calculate the acoustic-signal feature at the first moment through a following equation:

$$m_t = FC\left(y_t\right) \quad for\, t \in \left[1, T\right]$$,

where $m_t$ represents the acoustic-signal feature at the first moment, $y_t$ represents the hidden-state acoustic-signal feature at the first moment, $FC$ () represents a function of a fully-connected network, $t$ represents the first moment, and $T$ represents a quantity of all moments for the video.

The obtaining module is configured to:

obtain a visual-acoustic-signal feature of each target-signal feature in the sequence of target-signal features through a third sub-model in the predicting model.

The third sub-model includes a recurrent neural model based on a GRU; the obtaining module may be configured to:

generate a sequence of visual-acoustic-signal features that corresponds to the sequence of target-signal features, according to the visual-acoustic-signal feature of each target-signal feature; and
determine the classification predicting result according to the sequence of visual-acoustic-signal features.

In an optional embodiment, the obtaining module may be configured to:

obtain the target-signal feature at the first moment and the visual-acoustic-signal feature at the second moment, where the second moment is previous to and adjacent to the first moment; and
obtain the visual-acoustic-signal feature at the first moment through the third sub-model, where the visual-acoustic-signal feature at the first moment corresponds to the target-signal feature at the first moment, and corresponds to the visual-acoustic-signal feature at the second moment.

In an optional embodiment, the obtaining module may be configured to calculate the visual-acoustic-signal feature at the first moment through following equations:

$$H_t = GRU\left(v_t, H_{t-1}\right) \quad for\, t \in \left[1, T\right]$$,

and

$$v_t = \left[ h_t ; m_t \right]$$

where $H_t$ represents the visual-acoustic-signal feature at the first moment, *GRU* ( ) represents a GRU function, $H_{t-1}$ represents the visual-acoustic-signal feature at the second moment, $v_t$ represents the target-signal feature at the first moment, $h_t$ represents the hidden-state visual-signal feature at the first moment, and $m_t$ represents the acoustic-signal feature at the first moment.

In an optional embodiment, the obtaining module may be configured to calculate the classification predicting result through following equations:

$$lable = \sum_{n=1}^{N} g_n a_n$$

$$g_n = \sigma_g \left( W_g H_T + b_g \right), n \in \left[ 1, N \right]$$

and

$$a_n = \sigma_a \left( W_a H_T + b_a \right), n \in \left[ 1, N \right]$$

where *lable* represents the classification predicting result, $g_n$ represents a gate-representation function, $a_n$ represents an activation-representation function, $W_g$ represent a first matrix of linear transformation parameters, $W_a$ represent a second matrix of linear transformation parameters, $b_g$ represents a first vector of offset parameters, $b_a$ represents a second vector of offset parameters, $H_T$ represents the sequence of visual-acoustic-signal features, $\sigma_g$ represents a softmax function, $\sigma_a$ represents a sigmoid function, $N$ represents a quantity of all channels obtained after nonlinear transformation, and n represents a sequential number of a channel that is obtained after nonlinear transformation.

A server is provided according to another aspect of the present disclosure. The server is configured to perform the method for classifying the video according to the foregoing aspect. The server may include a module configured to execute the method for classifying the video according to the foregoing aspect.

The server may include a processor and a memory. The memory stores at least one instruction, at least one program, a code set, or an instruction set. The at least one instruction, the at least one program, the code set, or the instruction set is loaded and executed by the processor to implement the method according to the foregoing aspect.

A computer-readable storage medium is provided according to another aspect of the present disclosure. The computer-readable storage medium stores at least one instruction, at least one program, a code set, or an instruction set. The at least one instruction, the at least one program, the code set, or the instruction set is loaded and executed by a processor to implement the method according to the foregoing aspect.

In embodiments of the present disclosure, the method for classifying the video and the server are provided. Firstly, the server obtains the video that is to be processed, where the video includes at least one video frame, and each video frame corresponds to a moment. The server obtains the sequence of visual-signal features corresponding to the to-be-processed video through the predicting model for video classification, and obtains the sequence of acoustic-signal features that corresponds to the sequence of visual-signal features through the predicting model. Then, the server generates the sequence of target-signal features according to the sequence of visual-signal features and the sequence of acoustic-signal features. Finally, the server obtains the classification predicting result corresponding to the sequence of target-signal features through the predicting model. The classification predicting result is configured to predict a category of the video. In the foregoing method, temporal variations of not only visual features but also audio features are taken into account in video classification. Thereby, video content can be better represented, and both accuracy and an effect of video classification can be improved.

BRIEF DESCRIPTION OF THE DRAWINGS

Figure 1 is a schematic diagram of architecture of a video classification system according to an embodiment of the present disclosure;

Figure 2 is a schematic structural diagram of a predicting model for video classification according to an embodiment of the present disclosure;

Figure 3 is a schematic flowchart of a method for classifying a video according to an embodiment of the present disclosure;

Figure 4 is a schematic diagram of a video that is to be processed according to an embodiment of the present disclosure;

Figure 5 is a schematic structural diagram of a server according to an embodiment of the present disclosure; and

Figure 6 is another schematic structural diagram of server according to an embodiment of the present disclosure.

DESCRIPTION OF EMBODIMENTS

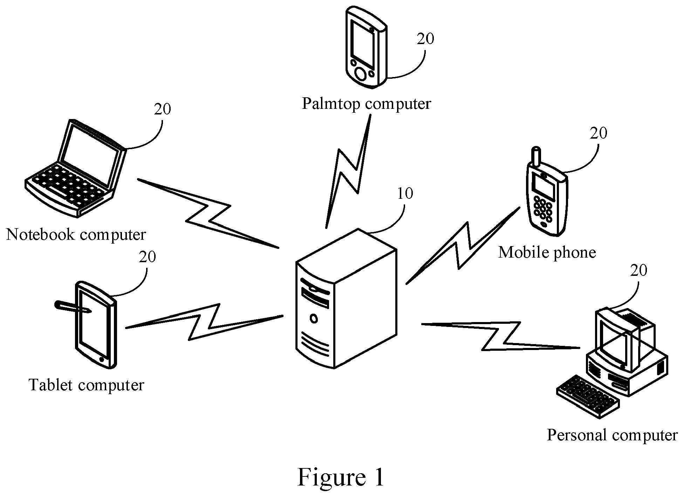

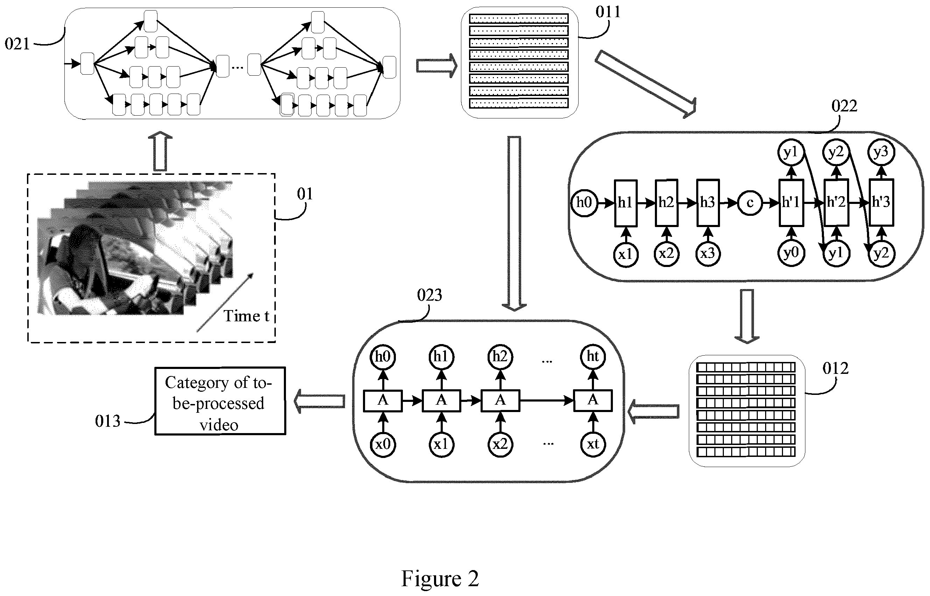

A method for classifying a video and a server are provided according to embodiments of the present disclosure. Temporal variations of not only visual features but also audio features are taken into account in video classification. Thereby, video content can be better represented, and both accuracy and an effect of video classification can be improved.
The terms "first", "second", "third", "fourth", and the like (if any) in the specification, claims, and drawings of the present disclosure are intended to distinguish among similar objects, and are not necessarily intended to describe a particular sequence or order. Data termed in such manner may be interchangeable in proper circumstances, so that embodiments of the present disclosure described herein may be implemented with an order other than the one illustrated or described herein. Moreover, the terms "include", "contain" and any other variants are intended to cover a non-exclusive inclusion. For example, a process, a method, a system, a product, or a device that includes a list of steps or modules is not necessarily limited to those steps or modules, but may include another step or another module, which is not expressly listed, or which is inherent to such process, method, system, product, or device.
A main objective of the present disclosure lies in providing a service for classifying video content. A server extracts a feature from a video. First, a sequence of visual-signal features in the video is obtained. Then, a sequence of acoustic-signal features is generated according to the sequence of visual-signal features. Finally, a sequence of target-signal features is obtained by synthesizing the sequence of visual-signal features and the sequence of acoustic-signal features. The video is classified according to the sequence of target-signal features, and thereby the server is capable to classify and label the video automatically. Additionally, embodiments of the present disclosure may be deployed on a video website for adding keywords to videos on the video website, and may be used for quick search, content matching, and personalized video recommendation.
A method for classifying a video is provided according to embodiments of the present disclosure, which is related to artificial intelligence. The method may be applied to a video classification system as shown in Figure 1. Figure 1 is a schematic diagram of architecture of a video classification system according to an embodiment of the present disclosure. As shown in Figure 1, the video classification system may include a server 10 and one or more terminal devices 20. The server 10 obtains a video that need to be classified. The video may be uploaded by a user via a client, or may be stored in advance in a memory of the server 10. The server 10 classifies the video(s), and obtains a classification result according to solutions provided in the present disclosure. The server 10 may deliver the classification result of each video to the client. The client is deployed on the terminal device 20. Reference is made to Figure 1, where the terminal device 20 includes, but is not limited to, a tablet computer, a notebook computer, a palmtop computer, a mobile phone, or a personal computer (PC). Herein the terminal device is not limited to the above cases.
Reference is made to Figure 2 for better understanding. Figure 2 is a schematic structural diagram of a predicting model for video classification according to an embodiment of the present disclosure. As shown in Figure 2, the server first obtains a video 01 that is to be processed. As shown in Figure 2, the video 01 includes multiple video frames. Each video frame corresponds to a temporal feature, and the temporal features may be characterized by t for distinction. Then, the server processes each video frame in the video through a first sub-model 021 in a predicting model for video classification, so as to obtain a visual-signal feature 011 corresponding to each video frame. Afterwards, the server processes the visual-signal feature 011 corresponding to each video frame in the video through a second sub-model 022 in the predicting model, to predict and obtain an acoustic-signal feature 012 corresponding to the visual-signal feature. The visual-signal feature 011 and the acoustic-signal feature 012 are synthesized to obtain a target-signal feature. Finally, the server inputs the target-signal feature into a third sub-model 023 in the predicting model, and obtains a predicting result 013. A category of the video may be determined according to the predicting result 013, and therefore the to-be-processed video can be classified.

Users often describe, comment, or provide personalized tags on video information in common video data. Thus, abundant text information related to online videos are generated, which may serve as a basis for video classification.

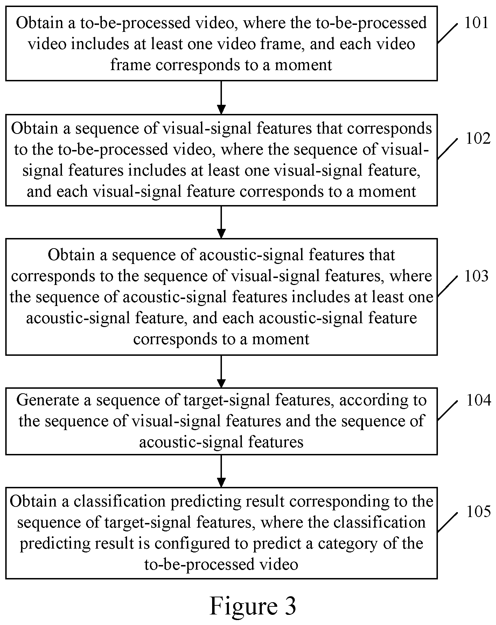

Hereinafter a method for classifying a video according to an embodiment of the present disclosure is illustrated from a perspective of a server. Reference is made to Figure 3. In an embodiment of the present disclosure, a method for classifying a video includes following steps 101 to 105.

In step 101, a to-be-processed video is obtained. The to-be-processed video includes at least one video frame, and each video frame corresponds to a moment.

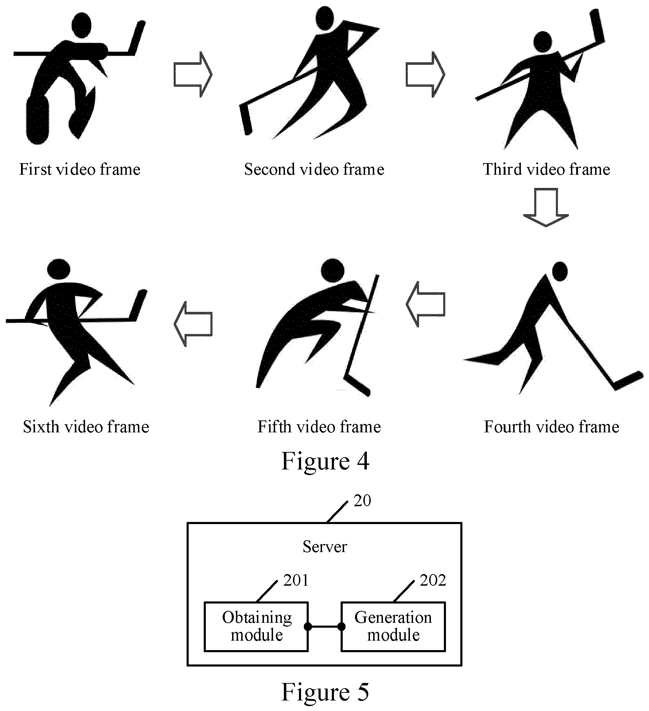

In this embodiment, the server first obtains the to-be-processed video. Reference is made to Figure 4, which is a schematic diagram of the to-be-processed video according to an optional embodiment of the present disclosure. The to-be-processed video includes multiple video frames. In Figure 4, each picture is a video frame. Each video frame corresponds to a moment, and the moment may be characterized by a temporal feature. Since the to-be-processed video has a playback period, each video frame has a unique playback moment, and the playback moment of a video frame is the moment corresponding to such video frame. It is assumed that the temporal feature of the 1st video frame in the to-be-processed video is "1", the temporal feature of the 2nd video frame is "2", and so forth, the temporal feature of the Tth video frame is "T".

In step 102, a sequence of visual-signal features that corresponds to the to-be-processed video is obtained. The sequence of visual-signal features includes at least one visual-signal feature, and each visual-signal feature corresponds to a moment.

In this embodiment, a to-be-processed video with a length of T seconds is inputted into a predicting model for video classification. The sequence of visual-signal features corresponding to the to-be-processed video is obtained through processing of the predicting model. The sequence of visual-signal features includes at least one visual-signal feature, and each visual-signal feature corresponds to a moment. The T seconds may be divided with an interval of one second to acquire T moments. In such case, the sequence of visual-signal features may be denoted by $x$, or denoted by $\{x_t\}$, where $t \in [1,T]$.

In step 103, a sequence of acoustic-signal features that corresponds to the sequence of visual-signal features is obtained. The sequence of acoustic-signal features includes at least one acoustic-signal feature, and each acoustic-signal feature corresponds to a moment.

In this embodiment, the sequence of visual-signal features with a length of T is processed by the predicting model, to obtain the sequence of acoustic-signal features that corresponds to the sequence of visual-signal features. The sequence of acoustic-signal features includes at least one acoustic-signal feature, and each acoustic-signal feature corresponds to a moment. In the case of dividing the T seconds with the interval of one second to acquire the T moments, the sequence of acoustic-signal features may be denoted by $m$, or denoted by $\{m_t\}$, where $t \in [1,T]$.

In step 104, a sequence of target-signal features is generated according to the sequence of visual-signal features and the sequence of acoustic-signal features.

In this embodiment, the sequence of visual-signal features with a length of T seconds and the sequence of acoustic-signal features with a length of T seconds is further processed by the predicting model, to obtain the sequence of target-signal features corresponding to the sequence of visual-signal features and the sequence of acoustic-signal features. The sequence of target-signal features includes at least one target-signal feature, and each target-signal feature corresponds to a moment. In the case of dividing the T seconds with the interval of one second to acquire the T moments, the sequence of target-signal features can be denoted by $v$, or denoted by $\{v_t\}$, where $t \in [1,T]$.

In step 105, a classification predicting result corresponding to the sequence of target-signal features is obtained. The classification predicting result is configured to predict a category of the to-be-processed video.

In this embodiment, the server performs modeling based on the sequence of target-signal features, to obtain a representation of the to-be-processed video. Then, the predicting model further processes the sequence of target-signal features, to obtain the classification predicting result corresponding to the sequence of target-signal features. The category of the to-be-processed video is predicted according to the classification predicting result.

In an optional embodiment, it is assumed that a quantity of all classification predicting results are five, and thus the classification predicting result may be represented by a binary code with a length of five bits. For example, a code corresponding to the classification predicting result "1" is 00001, a code corresponding to the classification predicting result "3" is 00100, and the rest can be deduced by analogy. The classification predicting result of the to-be-processed video may be represented as 00101, in case of including both "1" and "3".

For the whole to-be-processed video, a classification predicting result corresponding to each video frame is obtained through the foregoing steps. The classification predicting result may represent a probability that the to-be-processed video belongs to a particular category. Hence, each classification predicting result is not greater than one. For example, {0.01, 0.02, 0.9, 0.005, 1.0} is reasonable classification predicting results, which means that the probabilities of the to-be-processed video belonging to the first category, the second category, the third category, the fourth category, and the fifth category are 1.0, 0.005, 0.9, 0.02, and 0.01, respectively, that is, 100%, 5%, 90%, 2%, and 1%, respectively.

After the classification predicting result corresponding to each video frame is obtained, the classification predicting results corresponding to the video frames may be assigned with preset weights in calculation, so as to determine the category of the to-be-processed video. The calculation may be apply a weighting algorithm. That is, a weighted sum of the classification predicting results corresponding to the video frames may be calculated based on the preset weights, so as to obtain the classification predicting result of the to-be-processed video. Each weight is learned through linear regression, and is a value characterizing an importance of each video frame. A sum of the weights is 1, for example, the weights are 0.1, 0.4, and 0.5. Hereinafter illustrated is how to obtain the category of the to-be-processed video through calculation.

It is assumed that the to-be-processed video includes video frames No. 1, No. 2, and No. 3, and weight values of the three video frames are 0.2, 0.3, and 0.5, respectively. In addition, a classification predicting result of the video frame No. 1 is {0.01, 0.02, 0.9, 0.005, 1.0}, a classification predicting result of the video frame No. 2 is {0.02, 0.01, 0.9, 0.000 0.9}, and a classification predicting result of the video frame No. 3 is {0.2, 0.3, 0.8, 0.01 0.7}. In such case the classification predicting result of the to-be-processed video may be calculated as: {0.2 $\times$ 0.01 + 0.3 $\times$ 0.02 + 0.5 $\times$ 0.2, 0.2 $\times$ 0.02 + 0.3 $\times$ 0.01 + 0.5 $\times$ 0.3, 0.2 $\times$ 0.9 + 0.3 $\times$ 0.9 + 0.5 $\times$ 0.8, 0.2 $\times$ 0.005 + 0.3 $\times$ 0.000 + 0.5x0.01, 0.2 $\times$ 1.0 + 0.3 $\times$ 0.9 + 0.5 $\times$ 0.7} = {0.108, 0.157, 0.85, 0.0075, 0.82}.

The result of the above equation indicates that the to-be-processed video is most probable to belong to the third category, and is second most probable to belong to the first category. Hence, the to-be-processed video may be displayed in a video list of the third category that has a priority.

The categories of the to-be-processed video include "sports", "news" "music", "animation", "game", or the like, which is not limited herein.

In embodiments of the present disclosure, the method for classifying the video is provided. Firstly, the server obtains the video that is to be processed, where the video includes at least one video frame, and each video frame corresponds to a moment. The server obtains the sequence of visual-signal features corresponding to the to-be-processed video, and obtains the sequence of acoustic-signal features that corresponds to the sequence of visual-signal features. Then, the server generates the sequence of target-signal features according to the sequence of visual-signal features and the sequence of acoustic-signal features. Finally, the server obtains the classification predicting result corresponding to the sequence of target-signal features. The classification predicting result is configured to predict the category of the video. In the foregoing method, temporal variations of not only visual features but also audio features are taken into account in video classification. Thereby, video content can be better represented, and both accuracy and an effect of video classification can be improved.

An optional embodiment of the method for classifying the video is provided on a basis of the embodiment corresponding to Figure 3. The step 102 of obtaining the sequence of visual-signal features corresponding to the to-be-processed video may include following steps 1021 and 1022.

In step 1021, the visual-signal feature of each video frame in the video is obtained through a first sub-model in a predicting model for video classification. The first sub-model includes a convolutional neural network (CNN) model.

In step 1022, the sequence of visual-signal features that corresponds to the video is generated according to the visual-signal feature of each video frame.

In this embodiment, after obtaining the to-be-processed video, the server inputs each video frame in the to-be-processed video into the first sub-model in the predicting model. Then, the first sub-model outputs the visual-signal feature corresponding to each video frame. The visual-signal features form the sequence of visual-signal features.

The first sub-model may be a convolutional neural network (CNN) model provided with an inception structure. The first sub-model processes each video frame in the to-be-processed video, and extracts an image feature corresponding to each video frame. The image feature serves as the visual-signal feature. A dimension of the visual-signal feature may be 1024. The server generates the sequence of visual-signal features of the to-be-processed video according to the visual-signal feature of each video frame. It is assumed that the 1st video frame of the to-be-processed video is numbered as 1, the 2nd video frame is numbered as 2, and so forth, the last video frame is numbered as T. In such case, it may be determined that a temporal-feature sequence of the to-be-processed video is T (seconds) in length.

The inception structure includes three convolutions of different sizes, namely, a 1 $\times$ 1 convolutional layer, a 3 $\times$ 3 convolutional layer, and a 5 $\times$ 5 convolutional layer. The inception structure further includes a 3 $\times$ 3 maximum pooling layer. A fully-connected layer serving as the last layer is removed from the inception structure, and instead, a global average-pooling layer (which changes a size of a picture to 1 $\times$ 1) is applied as a replacement.

A depth and a width of a network may be increased to enhance capabilities of the network. Further, a quantity of free parameters needs to be reduced to suppress over-fitting. Therefore, there are three different convolutional templates, i.e. the 1 $\times$ 1 convolutional layer, the 3 $\times$ 3 convolutional layer, and the 5 $\times$ 5 convolutional layer, which are in a same level of the inception structure. The three convolutional templates are capable to extract features under different sizes, which further serves as a hybrid model. The maximum pooling layer is also capable to extract features, and differs from the convolutional layer in non-existent over-fitting due to there being no parameter. Thus, the maximum pooling layer may serve as another branch. In such case, a calculation amount of the whole network would increase, while and the network is not deepened. In view of the above, the 1 $\times$ 1 convolution is performed prior to the 3 $\times$ 3 convolution

and the $5 \times 5$ convolution, in order to reduce a quantity of input channels. Therefore, the network is deepened, while the computing amount is reduced.

Moreover, in this embodiment of the present disclosure, the server obtains the visual-signal feature of each video frame in the to-be-processed video through the first sub-model in the predicting model. The first sub-model may be the CNN model. The sequence of visual-signal features corresponding to the to-be-processed video is generated according to the visual-signal feature of each video frame. Accordingly, CNN is trained through each video frame and processes each video frame, which helps improve accuracy in extracting the visual-signal features and increase feasibility and operability of this solution.

An optional embodiment of the method for classifying the video is provided on a basis of the embodiment corresponding to Figure 3. The step 103 of obtaining the sequence of acoustic-signal features that corresponds to the sequence of visual-signal features may include following steps 1031 and 1032.

In step 1031, the acoustic-signal feature of each visual-signal feature in the sequence of visual-signal features is obtained through a second sub-model in the predicting model. The second sub-model includes a recurrent neural model based on a gated recurrent unit (GRU).

In step 1032, the sequence of acoustic-signal features that corresponds to the sequence of visual-signal features is generated according to the acoustic-signal feature of each visual-signal feature.

In this embodiment, after obtaining the sequence of visual-signal features, the server inputs each visual-signal feature in the sequence of visual-signal features into the second sub-model in the predicting model. Then, the second sub-model outputs the acoustic-signal feature corresponding to each visual-signal feature. The acoustic-signal features form the sequence of acoustic-signal features.

A structure of the gated recurrent unit (GRU) is similar to, and simpler than, that of long short-term memory (LSTM). A quantity of gates in the GRU is different from that in the LSTM. The GRU has only two gates, namely, a reset gate and an update gate. In the GRU, the reset gate and the update gate together control a process of calculating a new hidden state from a previous hidden state. Unlike the LSTM, there is no output gate in the GRU. The GRU has fewer parameters, therefore achieving a higher training speed and requiring fewer samples. In comparison, the LSTM has more parameters. The LSTM is more suitable, and may leads to a better model, in case of a large quantity of samples.

Moreover, in this embodiment of the present disclosure, the server obtains the acoustic-signal feature of each visual-signal feature in the sequence of visual-signal features through the second sub-model in the predicting model. The second sub-model includes the GRU-based recurrent neural model. Then, the sequence of acoustic-signal features that corresponds to the sequence of visual-signal features is generated according to the acoustic-signal feature of each visual-signal feature. Accordingly, the GRU is trained through each visual-signal feature and processes each visual-signal feature, which helps improve accuracy in extracting the visual-signal features and increase feasibility and operability of this solution.

An optional embodiment of the method for classifying the video is provided on a basis of the foregoing embodiment. The step 1031 of obtaining the acoustic-signal feature of each visual-signal feature in the sequence of visual-signal features through the second sub-model in the predicting model may include following steps 10311 to 10315.

In step 10311, the visual-signal feature at a first moment and a hidden-state visual-signal feature at a second moment are obtained. The second moment is previous to and adjacent to the first moment.

In step 10312, a hidden-state visual-signal feature at the first moment through the second sub-model is obtained. The hidden-state visual-signal feature at the first moment corresponds to the visual-signal feature at the first moment, and corresponds to the hidden-state visual-signal feature at the second moment.

In step 10313, a hidden-state acoustic-signal feature at the second moment is obtained.

In step 10314, a hidden-state acoustic-signal feature at the first moment is obtained through the second sub-model. The hidden-state acoustic-signal feature at the first moment corresponds to the hidden-state acoustic-signal feature at the second moment, and corresponds to the hidden-state visual-signal feature at the first moment.

In step 10315, the acoustic-signal feature at the first moment is generated according to the hidden-state acoustic-signal feature at the first moment.

In this embodiment, the second sub-model may include two GRUs, and one GRU is stacked on top of the other GRU. That is, a former GRU outputs the hidden-state visual-signal feature that serves as an input of a latter GRU, and the latter GRU outputs the hidden-state acoustic-signal feature.

As an optional embodiment, hereinafter the visual-signal feature at a particular moment among the whole sequence of visual-signal features is taken as an example for illustration. The other visual-signal features in the sequence of visual-signal features are processed in a similar manner. The server obtains the visual-signal feature at the first moment and the hidden-state visual-signal feature at the second moment. The second moment is previous to and adjacent to the first moment. It is assumed that there is an interval of one second between adjacent moments, and the first moment is the 2$^{rd}$ second. In such case, the second moment is the 1$^{st}$ second. In this embodiment, the first moment is denoted by $t$, the second moment is denoted by $t-1$, the sequence of visual-signal features is denoted by $x$, and the visual-signal feature at the first moment is denoted by $x_t$. The hidden-state visual-signal feature at the second moment may be obtained by modeling the video frames through the GRU-based recurrent neural network. A sequence of hidden-state visual-signal features is denoted by $h$, and the hidden-state visual-signal feature at the second moment is denoted by $h_{t-1}$. The visual-signal feature $x_t$ at the first moment and the hidden-state visual-signal feature $h_{t-1}$ at the second moment are inputted into the former GRU in the second sub-model, and the former GRU outputs the hidden-state visual-signal feature $h_t$ at the first moment.

Afterwards, the hidden-state acoustic-signal feature at the second moment is obtained. A sequence of hidden-state acoustic-signal features is denoted $y$, and the hidden-state acoustic-signal feature at the second moment is denoted by $y_{t-1}$. The hidden-state acoustic-signal feature $y_{t-1}$ at the second moment and the hidden-state visual-signal feature $h_t$ at the first moment are inputted into the latter GRU in the second sub-model, and the latter GRU outputs the hidden-state acoustic-signal feature $y_t$ at the first moment.

The hidden-state acoustic-signal feature $y_t$ at the first moment represents a feature, which is in a hidden state, of the recurrent neural network. Hence, the hidden-state acoustic-signal feature needs to be mapped to a new vector that represents the acoustic-signal feature $m_t$ at the first moment.

Moreover, this embodiment of the present disclosure introduces a manner of the server obtaining the acoustic-signal feature of each visual-signal feature in the sequence of visual-signal features through the second sub-model in the predicting model. That is, the server obtains the visual-signal feature at the first moment and the hidden-state visual-signal feature at the second moment, and then obtains the hidden-state visual-signal feature at the first moment through the second sub-model. Afterwards, the server obtains the hidden-state acoustic-signal feature at the second moment, and then obtains the hidden-state acoustic-signal feature at the first moment through the second sub-model. Finally, the server generates the acoustic-signal feature at the first moment according to the hidden-state acoustic-signal feature at the first moment. In such manner, few parameters may be used due to the GRU model. Therefore, efficiency of classification is improved due to fast training and few samples that are required.

An optional embodiment of the method for classifying the video is provided on a basis of the foregoing embodiment. The step 10312 of obtaining the hidden-state visual-signal feature at the first moment through the second sub-model may include a following step.

The hidden-state visual-signal feature at the first moment is calculated through a following equation.

$$ h_t = GRU\left(x_t, h_{t-1}\right) \quad for\, t \in [1, T] $$

$h_t$ represents the hidden-state visual-signal feature at the first moment, $GRU()$ represents a GRU function, $x_t$ represents the visual-signal feature at the first moment, $h_{t-1}$ represents the hidden-state visual-signal feature at the second moment, $t$ represents the first moment, and $T$ represents a quantity of all moments for the to-be-processed video.

In this embodiment, the hidden-state visual-signal feature is calculated through the following equation.

$$ h_t = GRU\left(x_t, h_{t-1}\right) \quad for\, t \in [1, T] $$

Inputs of the GRU function are the visual-signal feature $X_t$ at the first moment and the hidden-state visual-signal feature $h_{t-1}$ at the second moment. An output of the GRU function is the hidden-state visual-signal feature $h_t$ at the first moment.

In an optional embodiment, the GRU function includes following operations.

$$ h_t = z_t \circ h_{t-1} + \left(1 - z_t\right) \circ \sigma_h\left(W_t x_t + U_h\left(r_t \circ h_{t-1}\right) + b_h\right) $$

$$ z_t = \sigma_g\left(W_z x_t + U_z h_{t-1} + b_z\right) $$

$$ r_t = \sigma_g\left(W_r x_t + U_r h_{t-1} + b_r\right) $$

"$\circ$" represents dot-product operation, $W$ and $U$ are both matrices of linear transformation parameters, $b$ is a vector of bias parameters, $\sigma_h$ represents an arctan function, and $\sigma_g$ represents a sigmoid function. The subscripts $r$ and $z$ correspond to information of different gates, $r$ corresponds to a reset gate, and $z$ corresponds to an update gate. The subscript $h$ indicates that a parameter in a feature in a hidden state is transformed.

This embodiment of the present disclosure provides an optional manner for calculating the hidden-state visual-signal feature. That is, the video frames are modeled through the GRU to generate the sequence of hidden-state visual-signal features. Such manner provides an optional calculation mode for implementing a solution, thereby improving feasibility and operability of this solution.

An optional embodiment of the method for classifying the video is provided on a basis of the foregoing embodiment. The step 10314 of obtaining the hidden-state acoustic-signal feature at the first moment through the second sub-model may include a following step.

The hidden-state acoustic-signal feature at the first moment is calculated through a following equation.

$$y_t = GRU\left(h_t, y_{t-1}\right) \quad for\, t \in \left[1, T\right]$$

$y_t$ represents the hidden-state acoustic-signal feature at the first moment, $GRU(\ )$ represents a GRU function, $h_t$ represents the hidden-state visual-signal feature at the first moment, $y_{t-1}$ represents the hidden-state acoustic-signal feature at the second moment, $t$ represents the first moment, and $T$ represents a quantity of all moments for the to-be-processed video.

In this embodiment, the hidden-state acoustic-signal feature is calculated through the following equation.

$$y_t = GRU\left(h_t, y_{t-1}\right) \quad for\, t \in \left[1, T\right]$$

Inputs of the GRU function are the hidden-state visual-signal feature $h_t$ at the first moment and the hidden-state acoustic-signal feature $y_{t-1}$ at the second moment. An output of the GRU function is the hidden-state acoustic-signal feature $y_t$ at the first moment.

In an optional embodiment, the GRU function includes following operations.

$$y_t = z_t \circ y_{t-1} + \left(1 - z_t\right) \circ \sigma_h \left(W_t h_t + U_h \left(r_t \circ y_{t-1}\right) + b_h\right)$$

$$z_t = \sigma_g \left(W_z h_t + U_z y_{t-1} + b_z\right)$$

$$r_t = \sigma_g \left(W_r h_t + U_r y_{t-1} + b_r\right)$$

$W$ and $U$ are both matrices of linear transformation parameters, $b$ is a vector of bias parameters, $\sigma_h$ represents an arctan function, and $\sigma_g$ represents a sigmoid function.

This embodiment of the present disclosure provides an optional manner for calculating the hidden-state acoustic-signal feature. That is, the hidden-state visual-signal features are modeled through the GRU to generate the sequence of hidden-state acoustic-signal features. Such manner provides an optional calculation mode for implementing a solution, thereby improving feasibility and operability of this solution.

An optional embodiment of the method for classifying the video is provided on a basis of the foregoing embodiment. The step 10315 of generating the acoustic-signal feature at the first moment according to the hidden-state acoustic-signal feature at the first moment may include following steps.

The acoustic-signal feature at the first moment is calculated through a following equation.

$$m_t = FC\left(y_t\right) \quad for\, t \in \left[1, T\right]$$

$m_t$ represents the acoustic-signal feature at the first moment, $y_t$ represents the hidden-state acoustic-signal feature at the first moment, $FC\ ()$ represents a function of a fully-connected network, $t$ represents the first moment, and $T$ represents a quantity of all moments for the video.

In this embodiment, a fully-connected (FC) network is configured to map the hidden-state acoustic-signal feature to be a new vector representing the corresponding acoustic-signal feature.

That is, the acoustic-signal feature is calculated through the following formula.

$$m_t = FC\left(y_t\right) \quad for\, t \in \left[1, T\right]$$

An input of the FC function is the hidden-state acoustic-signal feature $y_t$ at the first moment, and an output of the FC function is the acoustic-signal feature $m_t$ at the first moment. The FC layer is configured to map a "distributed feature representation", which is obtained through learning, to a sample-label space. In practice, the FC layer may be implemented through convolution operations. That is, an FC layer of which a previous layer is another FC layer may be converted into a convolutional layer with a convolution kernel of $1 \times 1$, and an FC layer of which a previous layer is a convolutional layer may be converted into a global convolutional layer with a convolution kernel of $h \times w$. h and w are a height and a width, respectively, of a result of the previous convolution.

This embodiment of the present disclosure provides an optional manner for calculating the acoustic-signal feature. That is, the hidden-state acoustic-signal features are modeled through the FC layer to generate the sequence of acoustic-signal features. Such manner provides an optional calculation mode for implementing a solution, thereby improving feasibility and operability of this solution.

An optional embodiment of the method for classifying the video is provided on a basis of the foregoing embodiment. The step 105 of obtaining the classification predicting result corresponding to the sequence of target-signal features may include following steps 1051 to 1053.

In step 1051, a visual-acoustic-signal feature of each target-signal feature in the sequence of target-signal features is obtained through a third sub-model in the predicting model. The third sub-model includes a recurrent neural model based on a GRU.

In step 1052, a sequence of visual-acoustic-signal features that corresponds to the sequence of target-signal features is generated according to the visual-acoustic-signal feature of each target-signal feature.

In step 1053, the classification predicting result is determined according to the sequence of visual-acoustic-signal features.

In this embodiment, after obtaining the target-signal feature, the server inputs each target-signal feature in the sequence of target-signal features into the third sub-model in the predicting model. Then, the third sub-model outputs the visual-acoustic-signal feature corresponding to each target-signal feature. The visual-acoustic-signal features form the sequence of visual-acoustic-signal features. The sequence of visual-acoustic-signal features outputted by the third sub-model serves as a representation of the whole to-be-processed video. Different classifiers may be used to classify the to-be-processed video, based on the representations of to-be-processed videos which are obtained by learning. Thereby, the classification predicting result is finally obtained.

In machine learning, a classifier is configured to determine a category to which a new observation sample belongs, based on training data that is labeled with categories. The classifier can learn through unsupervised learning or supervised learning. The unsupervised learning refers to that samples are given to the classifier for learning, while there is no corresponding category label. A main objective is to find a hidden structure in unlabeled data. The supervised learning refers to deducing a classification function from labeled training data, and the classification function is capable to map a new sample to a corresponding label. In the supervised learning, each training sample includes a trainingsample feature and a corresponding label. A process of supervised learning includes: determining categories of training samples, collecting a set of training samples, determining a representation of an input feature of a learning function, determining a structure of the learning function and a corresponding learning algorithm, implementing a design of an entire training module, and evaluating accuracy of a classifier.

Moreover, in this embodiment of the present disclosure, the server obtains the visual-acoustic-signal feature of each target-signal feature in the sequence of target-signal features through the third sub-model in the predicting model. Then, the server generates the sequence of visual-acoustic-signal features that corresponds to the sequence of target-signal features, according to the visual-acoustic-signal feature of each target-signal feature. Finally, the server determines the classification predicting result according to the sequence of visual-acoustic-signal features. The third sub-model may be a GRU-based recurrent neural model. Accordingly, the GRU is trained based on each visual-signal feature and processes each visual-signal feature, which helps improve accuracy in extracting the visual-signal features and increase feasibility and operability of this solution.

An optional embodiment of the method for classifying the video is provided on a basis of the foregoing embodiment. The step 1051 of obtaining the visual-acoustic-signal feature of each target-signal feature in the sequence of target-signal features through the third sub-model in the predicting model may include following steps 10511 and 10512.

In step 10511, the target-signal feature at the first moment and the visual-acoustic-signal feature at the second moment are obtained. The second moment is previous to and adjacent to the first moment.

In step 10512, the visual-acoustic-signal feature at the first moment is obtained through the third sub-model. The visual-acoustic-signal feature at the first moment corresponds to the target-signal feature at the first moment, and corresponds to the visual-acoustic-signal feature at the second moment.

In this embodiment, the third sub-model may include a GRU. The target-signal feature at a current moment and the visual-acoustic-signal feature at a moment last to the current moment are inputted into the GRU. Then, the GRU outputs the visual-acoustic-signal feature at the current moment.

As an optional embodiment, hereinafter the target-signal feature of at a particular moment among the whole sequence target-signal features is taken as an example for illustration. The other target-signal features in the sequence of target-signal features are processed in a similar manner. The server obtains the target-signal feature at the first moment and the visual-acoustic-signal feature at the second moment. The second moment is previous to and adjacent to the first moment. It is assumed that there is an interval of one second between adjacent moments, and the first moment is the 2$^{rd}$ second. In such case, the second moment is the 1$^{st}$ second. In this embodiment, the first moment is denoted by $t$, the second moment is denoted by $t$-1, the sequence of target-signal features is denoted by $v$, and the target-signal feature at the first moment is denoted by $v_t$. The visual-acoustic-signal feature at the second moment may be obtained by modeling the target-signal features through the GRU-based recurrent neural network. A sequence of visual-acoustic-signal features is denoted by $H$, and the visual-acoustic-signal feature at the second moment is denoted by $H_{t-1}$. The target-signal feature $v_t$ at the first moment and the visual-acoustic-signal feature $H_{t-1}$ at the second moment are inputted into the GRU in the third sub-model, and the GRU outputs the visual-acoustic-signal feature $H_t$ at the first moment.

Moreover, in this embodiment of the present disclosure, the server may obtain the target-signal feature at the first moment and the visual-acoustic-signal feature at the second moment, and then obtain the visual-acoustic-signal feature at the first moment through the third sub-model. The visual-acoustic-signal feature at the first moment corresponds to the target-signal feature at the first moment, and corresponds to the visual-acoustic-signal feature at the second moment. Accordingly, the GRU is trained through each visual-acoustic-signal feature and processes each visual-acoustic-signal feature, which helps improve accuracy in extracting the visual-acoustic-signal feature and increase feasibility and operability of this solution.

An optional embodiment of the method for classifying the video is provided on a basis of the foregoing embodiment. The step 10512 of obtaining the visual-acoustic-signal feature at the first moment through the third sub-model may include a following step.

The visual-acoustic-signal feature at the first moment is calculated through following equations.

$$H_t = GRU\left(v_t, H_{t-1}\right) \quad for\, t \in \left[1, T\right]$$

$$v_t = \left[h_t; m_t\right]$$

$H_t$ represents the visual-acoustic-signal feature at the first moment, $GRU$ ( ) represents a function of the gated recurrent unit, $H_{t-1}$ represents the visual-acoustic-signal feature at the second moment, $v_t$ represents the target-signal feature at the first moment, $h_t$ represents the hidden-state visual-signal feature at the first moment, and $m_t$ represents the acoustic-signal feature at the first moment.

In this embodiment, the target-signal feature is a combination of the acoustic-signal feature and the hidden-state visual-signal feature. The hidden-state visual-signal feature at the first moment is denoted by $h_t$ and the acoustic-signal feature at the first moment is denoted by $m_t$. Accordingly, the target-signal feature at the first moment is expressed as $v_t = [h_t; m_t]$.

The visual-acoustic-signal feature is calculated through the following equation.

$$H_t = GRU\left(v_t, H_{t-1}\right) \quad for\, t \in \left[1, T\right]$$

Inputs of the GRU function are the target-signal feature $v_t$ at the first moment and the visual-acoustic-signal feature $H_{t-1}$ at the second moment. An output of the GRU function is the visual-acoustic-signal feature $H_t$ at the first moment.

In an optional embodiment, the GRU function includes following operations.

$$H_t = z_t \circ H_{t-1} + \left(1 - z_t\right) \circ \sigma_h\left(W_t v_t + U_h\left(r_t \circ H_{t-1}\right) + b_h\right)$$

$$z_t = \sigma_g\left(W_z v_t + U_z H_{t-1} + b_z\right)$$

$$r_t = \sigma_g\left(W_r v_t + U_r H_{t-1} + b_r\right)$$

$W$ and $U$ are both matrices of linear transformation parameters, $b$ is a vector of bias parameters, $\sigma_h$ represents an arctan function, and $\sigma_g$ represents a sigmoid function.

This embodiment of the present disclosure provides an optional manner for calculating the visual-acoustic-signal feature. That is, the target-signal feature is obtained, and the target-signal feature is a combination of the hidden-state visual-signal feature and the acoustic-signal feature that have been generated. The target-signal features are modeled through the GRU to generate the visual-acoustic-signal features. Such manner provides an optional calculation mode for implementing a solution, thereby improving feasibility and operability of this solution.

An optional embodiment of the method for classifying the video is provided on a basis of the foregoing embodiment. The step 1053 of determining the classification predicting result according to the sequence of visual-acoustic-signal features may include a following step.

The classification predicting result is calculated through following equations.

$$lable = \sum_{n=1}^{N} g_n a_n$$

$$g_n = \sigma_g \left( W_g H_T + b_g \right), n \in [1, N]$$

$$a_n = \sigma_a \left( W_a H_T + b_a \right), n \in [1, N]$$

*table* represents the classification predicting result, $g_n$ represents a gate-representation function, $a_n$ represents an activation-representation function, $W_g$ represent a first matrix of linear transformation parameters, $W_a$ represent a second matrix of linear transformation parameters, $b_g$ represents a first vector of offset parameters, $b_a$ represents a second vector of offset parameters, $H_T$ represents the sequence of visual-acoustic-signal features, $\sigma_g$ represents a softmax function, $\sigma_a$ represents a sigmoid function, $N$ represents a quantity of all channels obtained after nonlinear transformation, and $n$ represents a sequential number of a channel that is obtained after nonlinear transformation. $n$ is a positive integer no greater than N.

In this embodiment, an example is taken to illustrate how to calculate the classification predicting result corresponding to the sequence of visual-acoustic-signal features through corresponding equations. First, nonlinear transformation is performed on a representation of the sequence of visual-acoustic-signal features, to obtain N channels of gate representations and N channels of activation representations. Then, corresponding channels in the two types of representations are multiplied in a row-by-row manner. Thereby, the classification predicting result is finally obtained.

Optional mathematical equations are as follows.

$$g_n = \sigma_g \left( W_g H_T + b_g \right), n \in [1, N]$$

$$a_n = \sigma_a \left( W_a H_T + b_a \right), n \in [1, N]$$

The corresponding equation of a classification network is as follows.

$$lable = \sum_{n=1}^{N} g_n a_n$$

The obtained $g_n$ and $a_n$ are both vectors. Generally, *lable* is a function regarding probability. *lable* may be expressed as one or more vectors, and each vector corresponds to probability information of a corresponding category.

Different classifiers may be applied to classify the to-be-processed video, based on classification predicting results that are obtained through learning. There are many optional classifiers, for example, a mixed expert model or a support vector machine (SVM) model.

Moreover, this embodiment of the present disclosure introduces an optional manner for obtaining the classification predicting result. That is, the classification predicting result is calculated through the activation-representation function in conjunction with the gate-representation function. Such manner is capable to calculate the classification predicting result through relevant equations. An optional manner for implementing a solution is provided, thereby improving feasibility and operability of this solution.

Hereinafter illustrated is a server according to an embodiment of the present disclosure. Reference is made to Figure 5, which is a schematic diagram of a server according to an embodiment of the present disclosure. The server 20 includes an obtaining module 201 and a generation module 202.

The obtaining module 201 is configured to obtain a to-be-processed video. The to-be-processed video includes at least one video frame, and each video frame corresponds to a moment.

The obtaining module 201 is further configured to obtain a sequence of visual-signal features that corresponds to the to-be-processed video. The sequence of visual-signal features includes at least one visual-signal feature, and each visual-signal feature corresponds to a moment.

The obtaining module 201 is further configured to obtain a sequence of acoustic-signal features that corresponds to the sequence of visual-signal features. The sequence of acoustic-signal features includes at least one acoustic-signal feature, and each acoustic-signal feature corresponds to a moment.

The generation module 202 is configured to generate sequence of target-signal features is generated according to the sequence of visual-signal features and the sequence of acoustic-signal features that are obtained by the obtaining module 201.

The obtaining module 201 is further configured to obtain a classification predicting result corresponding to the sequence of target-signal features that is generated by the generation module 202. The classification predicting result is configured to predict a category of the to-be-processed video.

In this embodiment, the obtaining module 201 obtains the to-be-processed video. The to-be-processed video includes at least one video frame, each of which corresponds to a moment. The obtaining module 201 obtains the sequence of visual-signal features corresponding to the to-be-processed vide. The sequence of visual-signal features includes at least one visual-signal feature, each of which corresponds to a moment. The obtaining module 201 obtains the sequence of acoustic-signal features that corresponds to the sequence of visual-signal features. The sequence of acoustic-signal features includes at least one acoustic-signal feature, each of which corresponds to a moment. The generation module 202 generates the sequence of target-signal features according to the sequence of visual-signal features and the sequence of acoustic-signal features that are obtained by the obtaining module 201. The obtaining module 201 obtains the classification predicting result, which corresponds to the sequence of target-signal features that is generated by the generation module 202. The classification predicting result is configured to predict the category of the to-be-processed video.

In embodiments of the present disclosure, the server is provided. Firstly, the server obtains the video that is to be processed, where the video includes at least one video frame, and each video frame corresponds to a moment. The server obtains the sequence of visual-signal features corresponding to the to-be-processed video through the predicting model for video classification, and obtains the sequence of acoustic-signal features that corresponds to the sequence of visual-signal features through the predicting model. Then, the server generates the sequence of target-signal features according to the sequence of visual-signal features and the sequence of acoustic-signal features. Finally, the server obtains the classification predicting result corresponding to the sequence of target-signal features through the predicting model. The classification predicting result is configured to predict a category of the video. In the foregoing method, temporal variations of not only visual features but also audio features are taken into account in video classification. Thereby, video content can be better represented, and both accuracy and an effect of video classification can be improved.

An optional embodiment of the server 20 is provided on a basis of the embodiment corresponding to Figure 5. The obtaining module 201 may be configured to obtain the visual-signal feature of each video frame in the video, through a first sub-model in a predicting model for video classification. The first sub-model includes a convolutional neural network (CNN) model. The obtaining module 201 may be further configured to generate the sequence of visual-signal features that corresponds to the video, according to the visual-signal feature of each video frame.

Moreover, in this embodiment of the present disclosure, the server obtains the visual-signal feature of each video frame in the to-be-processed video through the first sub-model in the predicting model. The first sub-model may be the CNN model. The sequence of visual-signal features corresponding to the to-be-processed video is generated according to the visual-signal feature of each video frame. Accordingly, CNN is trained through each video frame and processes each video frame, which helps improve accuracy in extracting the visual-signal features and increase feasibility and operability of this solution.

An optional embodiment of the server 20 is provided on a basis of the embodiment corresponding to Figure 5. The obtaining module 201 may be configured to obtain the acoustic-signal feature of each visual-signal feature in the sequence of visual-signal features, through a second sub-model in the predicting model. The second sub-model includes a recurrent neural model based on a gated recurrent unit (GRU). The obtaining module 201 may be further configured to generate the sequence of acoustic-signal features that corresponds to the sequence of visual-signal features, according to the acoustic-signal feature of each visual-signal feature.

Moreover, in this embodiment of the present disclosure, the server obtains the acoustic-signal feature of each visual-signal feature in the sequence of visual-signal features through the second sub-model in the predicting model. The second sub-model includes the GRU-based recurrent neural model. Then, the sequence of acoustic-signal features that corresponds to the sequence of visual-signal features is generated according to the acoustic-signal feature of each visual-signal feature. Accordingly, the GRU is trained through each visual-signal feature and processes each visual-signal feature, which helps improve accuracy in extracting the visual-signal features and increase feasibility and operability of this solution.

An optional embodiment of the server 20 is provided on a basis of the foregoing embodiment.

The obtaining module 201 may be configured to obtain the visual-signal feature at a first moment and a hidden-state visual-signal feature at a second moment. The second moment is previous to and adjacent to the first moment.

The obtaining module 201 may be configured to obtain a hidden-state visual-signal feature at the first moment, through the second sub-model. The hidden-state visual-signal feature at the first moment corresponds to the visual-signal feature at the first moment, and corresponds to the hidden-state visual-signal feature at the second moment.

The obtaining module 201 may be configured to obtain a hidden-state acoustic-signal feature at the second moment.

The obtaining module 201 may be configured to obtain a hidden-state acoustic-signal feature at the first moment, through the second sub-model. The hidden-state acoustic-signal feature at the first moment corresponds to the hidden-state acoustic-signal feature at the second moment, and corresponds to the hidden-state visual-signal feature at the first moment.

The obtaining module 201 may be configured to generate an acoustic-signal feature at the first moment according to the hidden-state acoustic-signal feature at the first moment.

Moreover, this embodiment of the present disclosure introduces a manner of the server obtaining the acoustic-signal feature of each visual-signal feature in the sequence of visual-signal features through the second sub-model in the predicting model. That is, the server obtains the visual-signal feature at the first moment and the hidden-state visual-signal feature at the second moment, and then obtains the hidden-state visual-signal feature at the first moment through the second sub-model. Afterwards, the server obtains the hidden-state acoustic-signal feature at the second moment, and then obtains the hidden-state acoustic-signal feature at the first moment through the second sub-model. Finally, the server generates the acoustic-signal feature at the first moment according to the hidden-state acoustic-signal feature at the first moment. In such manner, few parameters may be used due to the GRU model. Therefore, efficiency of classification is improved due to fast training and few samples that are required.

An optional embodiment of the server 20 is provided on a basis of the embodiment corresponding to Figure 5. The obtaining module 201 may be configured to calculate the hidden-state visual-signal feature at the first moment through a following equation.

$$ h_t = GRU\left(x_t, h_{t-1}\right) \quad for\, t \in [1, T] $$

$h_t$ represents the hidden-state visual-signal feature at the first moment, $GRU(\,)$ represents a GRU function, $x_t$ represents the visual-signal feature at the first moment, $h_{t-1}$ represents the hidden-state visual-signal feature at the second moment, $t$ represents the first moment, and $T$ represents a quantity of all moments for the to-be-processed video.

This embodiment of the present disclosure provides an optional manner for calculating the hidden-state visual-signal feature. That is, the video frames are modeled through the GRU to generate the sequence of hidden-state visual-signal features. Such manner provides an optional calculation mode for implementing a solution, thereby improving feasibility and operability of this solution.

An optional embodiment of the server 20 is provided on a basis of the embodiment corresponding to Figure 5. The obtaining module 201 may be configured to calculate the hidden-state acoustic-signal feature at the first moment through a following equation.

$$ y_t = GRU\left(h_t, y_{t-1}\right) \quad for\, t \in [1, T] $$

$y_t$ represents the hidden-state acoustic-signal feature at the first moment, $GRU(\,)$ represents a GRU function, $h_t$ represents the hidden-state visual-signal feature at the first moment, $y_{t-1}$ represents the hidden-state acoustic-signal feature at the second moment, $t$ represents the first moment, and $T$ represents a quantity of all moments for the to-be-processed video.

This embodiment of the present disclosure provides an optional manner for calculating the hidden-state acoustic-signal feature. That is, the hidden-state visual-signal features are modeled through the GRU to generate the sequence of hidden-state acoustic-signal features. Such manner provides an optional calculation mode for implementing a solution, thereby improving feasibility and operability of this solution.

An optional embodiment of the server 20 is provided on a basis of the embodiment corresponding to Figure 5. The obtaining module 201 may be configured to calculate the acoustic-signal feature at the first moment through a following equation.

$$m_t = FC(y_t) \quad for\, t \in [1, T]$$

$m_t$ represents the acoustic-signal feature at the first moment, $y_t$ represents the hidden-state acoustic-signal feature at the first moment, $FC$ () represents a function of a fully-connected network, $t$ represents the first moment, and $T$ represents a quantity of all moments for the video.

This embodiment of the present disclosure provides an optional manner for calculating the acoustic-signal feature. That is, the hidden-state acoustic-signal features are modeled through the FC layer to generate the sequence of acoustic-signal features. Such manner provides an optional calculation mode for implementing a solution, thereby improving feasibility and operability of this solution.

An optional embodiment of the server 20 is provided on a basis of the embodiment corresponding to Figure 5. The obtaining module 201 may be configured to obtain a visual-acoustic-signal feature of each target-signal feature in the sequence of target-signal features, through a third sub-model in the predicting model. The third sub-model includes a recurrent neural model based on a GRU.

The obtaining module 201 may be further configured to generate a sequence of visual-acoustic-signal features that corresponds to the sequence of target-signal features, according to the visual-acoustic-signal feature of each target-signal feature.

The obtaining module 201 may be further configured to determine the classification predicting result, according to the sequence of visual-acoustic-signal features.

Moreover, in this embodiment of the present disclosure, the server obtains the visual-acoustic-signal feature of each target-signal feature in the sequence of target-signal features through the third sub-model in the predicting model. Then, the server generates the sequence of visual-acoustic-signal features that corresponds to the sequence of target-signal features, according to the visual-acoustic-signal feature of each target-signal feature. Finally, the server determines the classification predicting result according to the sequence of visual-acoustic-signal features. The third sub-model may be a GRU-based recurrent neural model. Accordingly, the GRU is trained based on each visual-signal feature and processes each visual-signal feature, which helps improve accuracy in extracting the visual-signal features and increase feasibility and operability of this solution.

An optional embodiment of the server 20 is provided on a basis of the embodiment corresponding to Figure 5. The obtaining module 201 may be configured to obtain the target-signal feature at the first moment and the visual-acoustic-signal feature at the second moment. The second moment is previous to and adjacent to the first moment.

The obtaining module 201 may be further configured to obtain the visual-acoustic-signal feature at the first moment, through the third sub-model. The visual-acoustic-signal feature at the first moment corresponds to the target-signal feature at the first moment, and corresponds to the visual-acoustic-signal feature at the second moment.

Moreover, in this embodiment of the present disclosure, the server may obtain the target-signal feature at the first moment and the visual-acoustic-signal feature at the second moment, and then obtain the visual-acoustic-signal feature at the first moment through the third sub-model. The visual-acoustic-signal feature at the first moment corresponds to the target-signal feature at the first moment, and corresponds to the visual-acoustic-signal feature at the second moment. Accordingly, the GRU is trained through each visual-acoustic-signal feature and processes each visual-acoustic-signal feature, which helps improve accuracy in extracting the visual-acoustic-signal feature and increase feasibility and operability of this solution.

An optional embodiment of the server 20 is provided on a basis of the embodiment corresponding to Figure 5. The obtaining module 201 may be configured to calculate the visual-acoustic-signal feature at the first moment through following equations.

$$H_t = GRU(v_t, H_{t-1}) \quad for\, t \in [1, T]$$

$$v_t = [h_t; m_t]$$

$H_t$ represents the visual-acoustic-signal feature at the first moment, $GRU$ () represents a function of the gated recurrent unit, $H_{t-1}$ represents the visual-acoustic-signal feature at the second moment, $v_t$ represents the target-signal feature at the first moment, $h_t$ represents the hidden-state visual-signal feature at the first moment, and $m_t$ represents the acoustic-signal feature at the first moment.

This embodiment of the present disclosure provides an optional manner for calculating the visual-acoustic-signal feature. That is, the target-signal feature is obtained, and the target-signal feature is a combination of the hidden-state visual-signal feature and the acoustic-signal feature that have been generated. The target-signal features are modeled through the GRU to generate the visual-acoustic-signal features. Such manner provides an optional calculation mode for implementing a solution, thereby improving feasibility and operability of this solution.

An optional embodiment of the server 20 is provided on a basis of the embodiment corresponding to Figure 5. The obtaining module 201 may calculate the classification predicting result through following equations.

$$lable = \sum_{n=1}^{N} g_n a_n$$

$$g_n = \sigma_g \left( W_g H_T + b_g \right), n \in \left[ 1, N \right]$$

$$a_n = \sigma_a \left( W_a H_T + b_a \right), n \in \left[ 1, N \right]$$

*table* represents the classification predicting result, $g_n$ represents a gate-representation function, $a_n$ represents an activation-representation function, $W_g$ represent a first matrix of linear transformation parameters, $W_a$ represent a second matrix of linear transformation parameters, $b_g$ represents a first vector of offset parameters, $b_a$ represents a second vector of offset parameters, $H_T$ represents the sequence of visual-acoustic-signal features, $\sigma_g$ represents a softmax function, $\sigma_a$ represents a sigmoid function, $N$ represents a quantity of all channels obtained after nonlinear transformation, and $n$ represents a sequential number of a channel that is obtained after nonlinear transformation.

Moreover, this embodiment of the present disclosure introduces an optional manner for obtaining the classification predicting result. That is, the classification predicting result is calculated through the activation-representation function in conjunction with the gate-representation function. Such manner is capable to calculate the classification predicting result through relevant equations. An optional manner for implementing a solution is provided, thereby improving feasibility and operability of this solution.

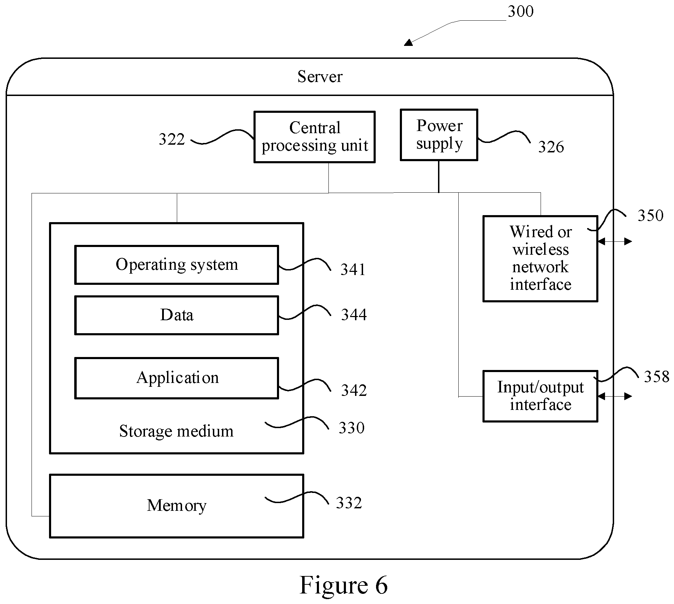

Figure 6 is a schematic structural diagram of a server according to an embodiment of the present disclosure. The server 300 may vary greatly due to different configurations or performances. The server 300 may include one or more central processing units (CPU) 322 (for example, one or more processors), a memory 332, one or more storage media 330 (for example, one or more mass storage devices) that store application programs 342 or data 344. The memory 332 and the storage medium 330 may be transient or persistent storages. A program stored in the storage medium 330 may include one or more modules (not indicated in the figure), and each module may include a series of instructions that operate on the server. In an optional embodiment, the central processing unit 322 may be configured to communicate with the storage medium 330, and perform the series of instructions in the storage medium 330 on the server 300.

The server 300 may further include one or more power supplies 326, one or more wired or wireless network interfaces 350, one or more input/output interfaces 358, and/or one or more operating systems 341, for example, Windows ServerTM, Mac OS XTM, UnixTM, LinuxTM, or FreeBSDTM.

The steps that are performed by the server in the foregoing embodiments may be based on a server structure as shown in Figure 6.

In this embodiment, the CPU 322 is configured to perform following steps.

A to-be-processed video is obtained. The to-be-processed video includes at least one video frame, and each video frame corresponds to a moment.

A sequence of visual-signal features that corresponds to the to-be-processed video is obtained. The sequence of visual-signal features includes at least one visual-signal feature, and each visual-signal feature corresponds to a moment.

A sequence of acoustic-signal features that corresponds to the sequence of visual-signal features is obtained. The sequence of acoustic-signal features includes at least one acoustic-signal feature, and each acoustic-signal feature corresponds to a moment.

A sequence of target-signal features is generated according to the sequence of visual-signal features and the sequence of acoustic-signal features.

A classification predicting result corresponding to the sequence of target-signal features is obtained. The classification predicting result is configured to predict a category of the to-be-processed video.

Those skilled in the art may clearly understand that, for convenience and conciseness of description, optional operating processes of the foregoing system, server, and modules may refer to corresponding process in the foregoing method embodiments, details of which are not repeated herein.

The system, the server, and the method disclosed in the foregoing embodiments may be implemented in other manners. For example, the described server embodiments are merely exemplary. For example, division of the modules is merely logical function division, and there may be other division manners during actual implementation. For example, multiple modules or components may be combined or integrated into another system, or some features may be absent or not performed. In addition, a mutual coupling, a direct coupling, or communication connection that is displayed or discussed may be implemented via some interfaces. An indirect coupling or communication connection among the servers or the modules may be implemented electrical, mechanical, or in another form.

The modules described as separate components may or may not be physically separated, and the components displayed as units may or may not be physical units. That is, they may be located in one place or may be distributed over multiple network units. Some or all of the modules may be selected according to actual needs to achieve objectives of solutions of the embodiments.

In addition, functional modules in the embodiments of in the present disclosure may be integrated into one processing module, or each of the modules may exist alone physically, or two or more modules are integrated into one module. The integrated module is implemented in a form of hardware, or in a form of a software functional module.

The integrated module may be implemented in the form of the software functional module, and sold or used as an independent product. In such case, the integrated module may be stored in a computer-readable storage medium. Based on such an understanding, an essence or a part of a technical solution that contributes to conventional technology, or the whole or a part of the technical solution of the present disclosure, may be implemented in a form of a software product. The computer software product is stored in a storage medium and includes several instructions for instructing a computer device (which may be a personal computer, a server, a network device, or the like) to perform all or some of the steps of the method described in the embodiments of the present disclosure. The foregoing storage medium includes any medium that can store program code, such as a USB flash drive, a removable hard disk, a read-only memory (read-only memory, ROM), a random access memory (random access memory, RAM), a magnetic disk, or an optical disc.

As described above, the above embodiments are only intended to describe the technical solutions of the present disclosure Although the present disclosure is described in detail with reference to the above embodiments, those skilled in the art should understand that equivalent replacements can be made to some of the technical features thereof.

**Claims**

1.  A method for classifying a video, comprising:

obtaining (101) a video that is to be processed, wherein the video comprises at least one video frame, and each video frame corresponds to a moment of at least one moment;
obtaining (102) a sequence of visual-signal features that corresponds to the video, wherein the sequence of visual-signal features comprises at least one visual-signal feature, and each visual-signal feature corresponds to a moment of the at least one moment;
obtaining (103) a sequence of acoustic-signal features that corresponds to the sequence of visual-signal features, wherein the sequence of acoustic-signal features comprises at least one acoustic-signal feature, and each acoustic-signal feature corresponds to a moment of the at least one moment;
generating (104) a sequence of target-signal features, through a predicting model according to the sequence of visual-signal features and the sequence of acoustic-signal features, wherein the sequence of target-signal features comprises at least one target-signal feature, and each target-signal feature corresponds to a moment of the at least one moment; and
obtaining (105) a classification predicting result through a third sub-model in the predicting model according to the sequence of target-signal features, wherein the classification predicting result is configured to predict a category of the video;
wherein the category of the video comprises one of "sports", "news", "music", "animation", "game" or the like;
wherein obtaining (103) the sequence of acoustic-signal features that corresponds to the sequence of visual-signal features comprises:

obtaining the acoustic-signal feature of each visual-signal feature in the sequence of visual-signal features through a second sub-model in the predicting model, wherein the second sub-model comprises a recurrent neural model based on a gated recurrent unit, GRU, wherein each visual-signal feature is inputted into the second sub-model to generate the acoustic-signal feature corresponding to each visual-signal feature; and
generating the sequence of acoustic-signal features that corresponds to the sequence of visual-signal features, according to the acoustic-signal feature of each visual-signal feature;
wherein obtaining (102) the sequence of visual-signal features that corresponds to the video comprises:

obtaining the visual-signal feature of each video frame in the video through a first sub-model in the predicting model for video classification, wherein the first sub-model comprises a convolutional neural network, CNN, model; and

generating the sequence of visual-signal features that corresponds to the video, according to the visual-signal feature of each video frame.

2. The method according to claim 1, wherein obtaining the acoustic-signal feature of each visual-signal feature in the sequence of visual-signal features through the second sub-model in the predicting model comprises:

obtaining the visual-signal feature at a first moment and a hidden-state visual-signal feature at a second moment, wherein the second moment is previous to and adjacent to the first moment;

obtaining a hidden-state visual-signal feature at the first moment through the second sub-model according to the visual-signal feature at the first moment and the hidden-state visual-signal feature at the second moment, wherein the hidden-state visual-signal feature at the first moment corresponds to the visual-signal feature at the first moment, and corresponds to the hidden-state visual-signal feature at the second moment;

obtaining a hidden-state acoustic-signal feature at the second moment;

obtaining a hidden-state acoustic-signal feature at the first moment through the second sub-model according to the hidden-state acoustic-signal feature at the second moment and the hidden-state visual-signal feature at the first moment, wherein the hidden-state acoustic-signal feature at the first moment corresponds to the hidden-state acoustic-signal feature at the second moment, and corresponds to the hidden-state visual-signal feature at the first moment; and

generating the acoustic-signal feature at the first moment, according to the hidden-state acoustic-signal feature at the first moment.

3. The method according to claim 2, wherein obtaining the hidden-state visual-signal feature at the first moment through the second sub-model comprises:

calculating the hidden-state visual-signal feature at the first moment through:

$$h_t = GRU\left(x_t, h_{t-1}\right) \quad for\, t \in \left[1, T\right]_,$$

wherein $h_t$ represents the hidden-state visual-signal feature at the first moment, $GRU(\,)$ represents a GRU function, $x_t$ represents the visual-signal feature at the first moment, $h_{t-1}$ represents the hidden-state visual-signal feature at the second moment, $t$ represents the first moment, and $T$ represents a quantity of all moments for the video.

4. The method according to claim 2 or 3, wherein obtaining the hidden-state acoustic-signal feature at the first moment through the second sub-model comprises:

calculating the hidden-state acoustic-signal feature at the first moment through:

$$y_t = GRU\left(h_t, y_{t-1}\right) \quad for\, t \in \left[1, T\right]_,$$

wherein $y_t$ represents the hidden-state acoustic-signal feature at the first moment, $GRU()$ represents a GRU function, $h_t$ represents the hidden-state visual-signal feature at the first moment, $y_{t-1}$ represents the hidden-state acoustic-signal feature at the second moment, $t$ represents the first moment, and $T$ represents a quantity of all moments for the video.

5. The method according to any one of claims 2 to 4, wherein generating the acoustic-signal feature at the first moment according to the hidden-state acoustic-signal feature at the first moment comprises:

calculating the acoustic-signal feature at the first moment through:

$$m_t = FC(y_t) \quad for\, t \in [1,T]$$,

wherein $m_t$ represents the acoustic-signal feature at the first moment, $y_t$ represents the hidden-state acoustic-signal feature at the first moment, $FC()$ represents a function of a fully-connected network, $t$ represents the first moment, and $T$ represents a quantity of all moments for the video.

6. The method according to any one of claims 1 to 5, wherein the obtaining (105) the classification predicting result corresponding to the sequence of target-signal features comprises:

obtain a visual-acoustic-signal feature of each target-signal feature in the sequence of target-signal features through the third sub-model in the predicting model, wherein the third sub-model comprises a recurrent neural model based on a GRU;
generating a sequence of visual-acoustic-signal features that corresponds to the sequence of target-signal features, according to the visual-acoustic-signal feature of each target-signal feature; and
determining the classification predicting result according to the sequence of visual-acoustic-signal features.

7. The method according to claim 6, wherein obtaining visual-acoustic-signal feature of each target-signal feature in the sequence of target-signal features through the third sub-model in the predicting model comprises:

obtaining the target-signal feature at the first moment and the visual-acoustic-signal feature at the second moment, wherein the second moment is previous to and adjacent to the first moment; and
obtaining the visual-acoustic-signal feature at the first moment through the third sub-model according to the target-signal feature at the first moment and the visual-acoustic-signal feature at the second moment, wherein the visual-acoustic-signal feature at the first moment corresponds to the target-signal feature at the first moment, and corresponds to the visual-acoustic-signal feature at the second moment.

8. The method according to claim 7, wherein obtaining the visual-acoustic-signal feature at the first moment through the third sub-model comprises:

calculating the visual-acoustic-signal feature at the first moment through:

$$H_t = GRU(v_t, H_{t-1}) \quad for\, t \in [1,T]$$,

and

$$v_t = [h_t; m_t]$$,

wherein $H_t$ represents the visual-acoustic-signal feature at the first moment, $GRU()$ represents a GRU function, $H_{t-1}$ represents the visual-acoustic-signal feature at the second moment, $v_t$ represents the target-signal feature at the first moment, $h_t$ represents the hidden-state visual-signal feature at the first moment, and $m_t$ represents the acoustic-signal feature at the first moment.

9. The method according to claim 6, wherein determining the classification predicting result according to the sequence of visual-acoustic-signal features comprises:

calculating the classification predicting result through:

$$lable = \sum_{n=1}^{N} g_n a_n$$,

$$g_n = \sigma_g \left( W_g H_T + b_g \right), n \in \left[ 1, N \right],$$

and

$$a_n = \sigma_a \left( W_a H_T + b_a \right), n \in \left[ 1, N \right],$$

wherein *lable* represents the classification predicting result, $g_n$ represents a gate-representation function, $a_n$ represents an activation-representation function, $W_g$ represent a first matrix of linear transformation parameters, $W_a$ represent a second matrix of linear transformation parameters, $b_g$ represents a first vector of offset parameters, $b_a$ represents a second vector of offset parameters, $H_T$ represents the sequence of visual-acoustic-signal features, $\sigma_g$ represents a softmax function, $\sigma_a$ represents a sigmoid function, $N$ represents a quantity of all channels obtained after nonlinear transformation, and $n$ represents a sequential number of a channel that is obtained after nonlinear transformation.

10. A server, comprising:

a memory, and
a processor;
wherein the memory stores at least one instruction, at least one program, a code set, or an instruction set; and
wherein the at least one instruction, the at least one program, the code set, or the instruction set is loaded and executed by the processor to implement the method according to any one of claims 1 to 9.

11. A computer-readable storage medium, storing at least one instruction, at least one program, a code set, or an instruction set,
wherein the at least one instruction, the at least one program, the code set, or the instruction set is loaded and executed by a processor to implement the method according to any one of claims 1 to 9.


**Patentansprüche**

1. Verfahren zur Klassifizierung eines Videos, umfassend:

Erhalten (101) eines zu verarbeitenden Videos, wobei das Video mindestens ein Videobild umfasst, und jedes Videobild einem Moment von wenigstens einem Moment entspricht;
Erhalten (102) einer Sequenz von visuellen Signalmerkmalen, die dem Video entspricht, wobei die Sequenz von visuellen Signalmerkmalen mindestens ein visuelles Signalmerkmal umfasst, und jedes visuelle Signalmerkmal einem Moment des wenigstens einen Moments entspricht;
Erhalten (103) einer Sequenz von akustischen Signalmerkmalen, die der Sequenz von visuellen Signalmerkmalen entspricht, wobei die Sequenz von akustischen Signalmerkmalen mindestens ein akustisches Signalmerkmal umfasst, und jedes akustische Signalmerkmal einem Moment des wenigstens einen Moments entspricht;
Erzeugen (104) einer Sequenz von Zielsignalmerkmalen durch ein Vorhersagemodell gemäß der Sequenz von visuellen Signalmerkmalen und der Sequenz von akustischen Signalmerkmalen, wobei die Sequenz von Zielsignalmerkmalen mindestens ein Zielsignalmerkmal umfasst und jedes Zielsignalmerkmal einem Moment des wenigstens einen Moments entspricht; und
Erhalten (105) eines Klassifikationsvorhersageergebnisses durch ein drittes Untermodell in dem Vorhersagemodell gemäß der Sequenz von Zielsignalmerkmalen, wobei das Klassifikationsvorhersageergebnis ausgebildet ist, eine Kategorie des Videos vorherzusagen;
wobei die Kategorie des Videos eines von "Sport", "Neuigkeiten", "Musik". "Unterhaltung", "Spiel" oder dergleichen umfasst;
wobei das Erhalten (103) der Sequenz von akustischen Signalmerkmalen, die der Sequenz von visuellen Signalmerkmalen entspricht, umfasst:

Erhalten des akustischen Signalmerkmals jedes visuellen Signalmerkmals in der Sequenz von visuellen Signalmerkmalen durch ein zweites Untermodell in dem Vorhersagemodell, wobei das zweite Untermodell ein rekurrentes neuronales Modell auf der Basis einer Gated Recurrent Unit, GRU, umfasst, wobei jedes visuelle Signalmerkmal in das zweite Untermodell eingegeben wird, um das akustische Signalmerkmal entsprechend jedem visuellen Signalmerkmal zu erzeugen; und

Erzeugen der Sequenz von akustischen Signalmerkmalen, die der Sequenz von visuellen Signalmerkmalen entspricht, in Übereinstimmung mit dem akustischen Signalmerkmal jedes visuellen Signalmerkmals; wobei das Erhalten (102) der Sequenz von visuellen Signalmerkmalen, die dem Video entspricht, umfasst:

Erhalten des visuellen Signalmerkmals jedes Videobildes in dem Video durch ein erstes Untermodell in dem Vorhersagemodell für die Videoklassifikation, wobei das erste Untermodell ein Modell eines Faltungsneuronalen Netzes, CNN, umfasst; und

Erzeugen der Sequenz von visuellen Signalmerkmalen, die dem Video entspricht, gemäß dem visuellen Signalmerkmal jedes Videobildes.

2. Verfahren nach Anspruch 1, wobei das Erhalten des akustischen Signalmerkmals jedes visuellen Signalmerkmals in der Sequenz von visuellen Signalmerkmalen durch das zweite Untermodell in dem Vorhersagemodell umfasst:

Erhalten des visuellen Signalmerkmals zu einem ersten Zeitpunkt und eines verborgenen-Zustands visuellen Signalmerkmals zu einem zweiten Zeitpunkt, wobei der zweite Zeitpunkt vor dem ersten Zeitpunkt liegt und an diesen angrenzt;

Erhalten eines verborgenen-Zustands visuellen Signalmerkmals zu dem ersten Zeitpunkt durch das zweite Untermodell gemäß dem visuellen Signalmerkmals zu dem ersten Zeitpunkt und dem verborgenen-Zustand visuellen Signalmerkmal zu dem zweiten Zeitpunkt, wobei das verborgener-Zustand visuelle Signalmerkmals zu dem ersten Zeitpunkt dem visuellen Signalmerkmals zu dem ersten Zeitpunkt entspricht und dem verborgenen-Zustand visuellen Signalmerkmal zu dem zweiten Zeitpunkt entspricht;

Erhalten eines verborgenen-Zustands akustischen Signalmerkmals zum zweiten Zeitpunkt;

Erhalten eines verborgenen-Zustands akustischen Signalmerkmals zum ersten Zeitpunkt durch das zweite Untermodell gemäß dem verborgenen-Zustand akustischen Signalmerkmal zum zweiten Zeitpunkt und dem verborgenen-Zustand visuellen Signalmerkmal zum ersten Zeitpunkt, wobei das verborgener-Zustand akustische Signalmerkmal zum ersten Zeitpunkt dem verborgenen-Zustand akustischen Signalmerkmal zum zweiten Zeitpunkt entspricht und dem verborgenen-Zustand visuellen Signalmerkmal zum ersten Zeitpunkt entspricht; und

Erzeugen des akustischen Signalmerkmals zu dem ersten Zeitpunkt entsprechend dem verborgenen-Zustand akustischen Signalmerkmal zu dem ersten Zeitpunkt.

3. Verfahren nach Anspruch 2, wobei das Erhalten des verborgenen-Zustands visuellen Signalmerkmals zu dem ersten Zeitpunkt durch das zweite Untermodell umfasst:

Berechnen des verborgenen-Zustands visuellen Signalmerkmals zum ersten Zeitpunkt durch:

$$h_t = GRU\left(x_t, h_{t-1}\right) \quad for\, t \in \left[1, T\right],$$

wobei $h_t$ das verborgener-Zustand visuelle Signalmerkmal zu dem ersten Zeitpunkt, GRU() eine GRU-Funktion darstellt, $x_t$ das visuelle Signalmerkmal zu dem ersten Zeitpunkt darstellt, $h_{t-1}$ das verborgener-Zustand visuelle Signalmerkmal zu dem zweiten Zeitpunkt darstellt, t den ersten Zeitpunkt darstellt und T eine Menge aller Zeitpunkte für das Video darstellt.

4. Verfahren nach Anspruch 2 oder 3, wobei das Erhalten des verborgenen-Zustands akustischen Signalmerkmals zum ersten Zeitpunkt durch das zweite Untermodell umfasst:

Berechnen des verborgenen-Zustands akustischen Signalmerkmals zu dem ersten Zeitpunkt durch:

$$y_t = GRU\left(h_t, y_{t-1}\right) \quad for\, t \in \left[1, T\right],$$

wobei $y_t$ das verborgener-Zustand akustische Signalmerkmal zum ersten Zeitpunkt, GRU() eine GRU-Funktion

darstellt, $h_t$ das verborgener-Zustand visuelle Signalmerkmal zum ersten Zeitpunkt darstellt, $y_{t-1}$ das verborgener-Zustand akustische Signalmerkmal zum zweiten Zeitpunkt darstellt, t den ersten Zeitpunkt darstellt und T eine Menge aller Zeitpunkte für das Video darstellt.

5. Verfahren nach einem beliebigen der Ansprüche 2 bis 4, wobei das Erzeugen des akustischen Signalmerkmals zum ersten Zeitpunkt gemäß dem verborgenen-Zustand akustischen Signalmerkmal zum ersten Zeitpunkt umfasst:

Berechnen des akustischen Signalmerkmals zum ersten Zeitpunkt durch:

$$m_t = FC(y_t) \quad for\, t \in [1,T]_,$$

wobei $m_t$ das akustischen Signalmerkmals zum ersten Zeitpunkt repräsentiert, $y_t$ das verborgener-Zustand akustische Signalmerkmal zum ersten Zeitpunkt repräsentiert, FCQ eine Funktion eines vollständig verbundenen Netzwerks repräsentiert, t den ersten Zeitpunkt repräsentiert und T eine Menge aller Zeitpunkte für das Video repräsentiert.

6. Verfahren nach einem der Ansprüche 1 bis 5, wobei das Erhalten (105) des Klassifizierungsvorhersageergebnisses, das der Sequenz von Zielsignalmerkmalen entspricht, umfasst:

Erhalten eines visuellen-akustischen Signalmerkmals jedes Zielsignalmerkmals in der Sequenz von Zielsignalmerkmalen durch das dritte Untermodell in dem Vorhersagemodell, wobei das dritte Untermodell ein rekurrentes neuronales Modell auf der Basis einer GRU umfasst;
Erzeugen einer Sequenz von visuellen-akustischen Signalmerkmalen, die der Sequenz von Zielsignalmerkmalen entspricht, gemäß dem visuellen-akustischen Signalmerkmal eines jeden Zielsignalmerkmals; und
Bestimmen des Klassifikationsvorhersageergebnisses gemäß der Sequenz der visuellen-akustischen Signalmerkmale.

7. Verfahren nach Anspruch 6, wobei das Erhalten des visuellen-akustischen Signalmerkmals jedes Zielsignalmerkmals in der Sequenz von Zielsignalmerkmalen durch das dritte Untermodell in dem Vorhersagemodell umfasst:

Erhalten des Zielsignalmerkmals zu dem ersten Zeitpunkt und des visuellen-akustischen Signalmerkmals zu dem zweiten Zeitpunkt, wobei der zweite Zeitpunkt vor dem ersten Zeitpunkt liegt und an diesen angrenzt; und
Erhalten des visuellen-akustischen Signalmerkmals zu dem ersten Zeitpunkt durch das dritte Untermodell gemäß dem Zielsignalmerkmal zu dem ersten Zeitpunkt und dem visuellen-akustischen Signalmerkmal zu dem zweiten Zeitpunkt, wobei das visuelle-akustische Signalmerkmal zu dem ersten Zeitpunkt dem Zielsignalmerkmal zu dem ersten Zeitpunkt entspricht und dem visuellen-akustischen Signalmerkmal zu dem zweiten Zeitpunkt entspricht.

8. Verfahren nach Anspruch 7, wobei das Erhalten des visuellen-akustischen Signalmerkmals zum ersten Zeitpunkt durch das dritte Untermodell umfasst:

Berechnen des visuellen-akustischen Signalmerkmals zum ersten Zeitpunkt durch:

$$H_t = GRU(v_t, H_{t-1}) \quad for\, t \in [1,T]_,$$

und

$$v_t = [h_t; m_t]_,$$

wobei $H_t$ das visuelle-akustische Signalmerkmal zum ersten Zeitpunkt repräsentiert, GRUQ eine GRU-Funktion repräsentiert, $H_{t-1}$ das visuelle-akustische Signalmerkmal zum zweiten Zeitpunkt repräsentiert, $v_t$ das Zielsignalmerkmal zum ersten Zeitpunkt repräsentiert, $h_t$ das verborgener-Zustand visuelle Signalmerkmal zum ersten

Zeitpunkt repräsentiert, und $m_t$ das akustische Signalmerkmal zum ersten Zeitpunkt repräsentiert.

9.  Verfahren nach Anspruch 6, wobei das Bestimmen des Klassifizierungsvorhersageergebnisses gemäß der Sequenz von visuellen-akustischen Signalmerkmalen umfasst:

Berechnen des Klassifikationsvorhersageergebnisses durch:

$$lable = \sum_{n=1}^{N} g_n a_n ,$$

$$g_n = \sigma_g \left( W_g H_T + b_g \right), n \in [1, N] ,$$

und

$$a_n = \sigma_a \left( W_a H_T + b_a \right), n \in [1, N] ,$$

wobei *lable* das Klassifikationsvorhersageergebnis darstellt, $g_n$ eine Gate-Darstellungsfunktion darstellt, $a_n$ eine Aktivierungs-Darstellungsfunktion darstellt, $W_g$ eine erste Matrix von linearen Transformationsparametern darstellt, $W_a$ eine zweite Matrix von linearen Transformationsparametern darstellt, $b_g$ einen ersten Vektor von Offset-Parametern darstellt, $b_a$ einen zweiten Vektor von Offset-Parametern darstellt, $H_T$ die Sequenz von visuellen-akustischen Signalmerkmalen darstellt, $\sigma_g$ eine Softmax-Funktion darstellt, $\sigma_a$ eine Sigmoid-Funktion darstellt, N eine Menge aller Kanäle darstellt, die nach nichtlinearer Transformation erhalten werden, und n eine fortlaufende Nummer eines Kanals darstellt, der nach nichtlinearer Transformation erhalten wird.

10. Server, umfassend:

einen Speicher, und
einen Prozessor;
wobei der Speicher mindestens einen Befehl, mindestens ein Programm, einen Codesatz oder einen Befehlssatz speichert; und
wobei der mindestens eine Befehl, das mindestens eine Programm, der Codesatz oder der Befehlssatz durch den Prozessor geladen und ausgeführt wird, um das Verfahren nach einem beliebigen der Ansprüche 1 bis 9 zu implementieren.

11. Computerlesbares Speichermedium, das mindestens einen Befehl, mindestens ein Programm, einen Codesatz oder einen Befehlssatz speichert,
wobei der mindestens eine Befehl, das mindestens eine Programm, der Codesatz oder der Befehlssatz von einem Prozessor geladen und ausgeführt wird, um das Verfahren nach einem der Ansprüche 1 bis 9 zu implementieren.


**Revendications**

1.  Procédé de classification d'une vidéo, comprenant:

obtenir (101) une vidéo qui doit être traitée, dans lequel la vidéo comprend au moins une image vidéo, et chaque image vidéo correspond à un moment d'au moins un moment;
obtenir (102) une séquence de caractéristiques de signal visuel qui correspond à la vidéo, dans lequel la séquence de caractéristiques de signal visuel comprend au moins une caractéristique de signal visuel, et chaque caractéristique de signal visuel correspond à un moment dudit au moins un moment;
obtenir (103) une séquence de caractéristiques de signal acoustique qui correspond à la séquence de caractéristiques de signal visuel, dans lequel la séquence de caractéristiques de signal acoustique comprend au moins une caractéristique de signal acoustique, et chaque caractéristique de signal acoustique correspond à un moment dudit au moins un moment;

générer (104) une séquence de caractéristiques de signal cible, par l'intermédiaire d'un modèle de prédiction en fonction de la séquence de caractéristiques de signal visuel et de la séquence de caractéristiques de signal acoustique, dans lequel la séquence de caractéristiques de signal cible comprend au moins une caractéristique de signal cible, et chaque caractéristique de signal cible correspond à un moment dudit au moins un moment; et

obtenir (105) un résultat de prédiction de classification par l'intermédiaire d'un troisième sous-modèle dans le modèle de prédiction en fonction de la séquence de caractéristiques de signal cible, dans lequel le résultat de prédiction de classification est configuré pour prédire une catégorie de la vidéo;

dans laquelle la catégorie de la vidéo comprend l'une des catégories suivantes : « sports », « actualités », « musique », « animation », « jeu » ou similaire;

dans lequel l'obtention (103) de la séquence de caractéristiques de signal acoustique qui correspond à la séquence de caractéristiques de signal visuel comprend:

> obtenir la caractéristique de signal acoustique de chaque caractéristique de signal visuel dans la séquence de caractéristiques de signal visuel par l'intermédiaire d'un deuxième sous-modèle dans le modèle de prédiction, dans lequel le deuxième sous-modèle comprend un modèle neuronal récurrent basé sur une unité récurrente fermée, GRU, dans lequel chaque caractéristique de signal visuel est entrée dans le deuxième sous-modèle pour générer la caractéristique de signal acoustique correspondant à chaque caractéristique de signal visuel; et

> générer la séquence de caractéristiques de signal acoustique qui correspond à la séquence de caractéristiques de signal visuel, en fonction de la caractéristique de signal acoustique de chaque caractéristique de signal visuel;

dans lequel l'obtention (102) de la séquence de caractéristiques de signal visuel qui correspond à la vidéo comprend:

> obtenir la caractéristique de signal visuel de chaque image vidéo dans la vidéo par l'intermédiaire d'un premier sous-modèle dans le modèle de prédiction pour la classification vidéo, dans lequel le premier sous-modèle comprend un modèle de réseau neuronal convolutif, CNN; et

> générer la séquence de caractéristiques de signal visuel qui correspond à la vidéo, en fonction de la caractéristique de signal visuel de chaque image vidéo.

**2.** Procédé selon la revendication 1, dans lequel l'obtention de la caractéristique de signal acoustique de chaque caractéristique de signal visuel dans la séquence de caractéristiques de signal visuel par l'intermédiaire du deuxième sous-modèle dans le modèle de prédiction comprend:

> obtenir la caractéristique de signal visuel à un premier moment et une caractéristique de signal visuel d'état caché à un deuxième moment, dans lequel le deuxième moment est antérieur et adjacent au premier moment;

> obtenir une caractéristique de signal visuel d'état caché au premier moment par l'intermédiaire du deuxième sous-modèle en fonction de la caractéristique de signal visuel au premier moment et de la caractéristique de signal visuel d'état caché au deuxième moment, dans lequel la caractéristique de signal visuel d'état caché au premier moment correspond à la caractéristique de signal visuel au premier moment, et correspond à la caractéristique de signal visuel d'état caché au deuxième moment;

> obtenir une caractéristique de signal acoustique d'état caché au deuxième moment;

> obtenir une caractéristique de signal acoustique d'état caché au premier moment par l'intermédiaire du deuxième sous-modèle en fonction de la caractéristique de signal acoustique d'état caché au deuxième moment et de la caractéristique de signal visuel d'état caché au premier moment, dans lequel la caractéristique de signal acoustique d'état caché au premier moment correspond à la caractéristique de signal acoustique d'état caché au deuxième moment, et correspond à la caractéristique de signal visuel d'état caché au premier moment; et

> générer la caractéristique de signal acoustique au premier moment, en fonction de la caractéristique de signal acoustique d'état caché au premier moment.

**3.** Procédé selon la revendication 2, dans lequel l'obtention de la caractéristique de signal visuel d'état caché au premier moment par l'intermédiaire du deuxième sous-modèle comprend:

> calculer la caractéristique de signal visuel d'état caché au premier moment par l'intermédiaire de:

$$h_t = GRU\left(x_t, h_{t-1}\right) \quad for\, t \in \left[1, T\right]$$,

où $h_t$ représente la caractéristique de signal visuel d'état caché au premier moment, *GRU* () représente une fonction GRU, $x_t$ représente la caractéristique de signal visuel au premier moment, $h_{t-1}$ représente la caractéristique de signal visuel d'état caché au deuxième moment, *t* représente le premier moment, et *T* représente une quantité de tous les moments de la vidéo.

4. Procédé selon la revendication 2 ou 3, dans lequel l'obtention de la caractéristique de signal acoustique d'état caché au premier moment par l'intermédiaire du deuxième sous-modèle comprend:

calculer la caractéristique de signal acoustique d'état caché au premier moment par l'intermédiaire de:

$$y_t = GRU\left(h_t, y_{t-1}\right) \quad for\, t \in \left[1, T\right],$$

où $y_t$ représente la caractéristique de signal acoustique d'état caché au premier moment, *GRU* () représente une fonction GRU, $h_t$ représente la caractéristique de signal visuel d'état caché au premier moment, $y_{t-1}$ représente la caractéristique de signal acoustique d'état caché au deuxième moment, *t* représente le premier moment, et *T* représente une quantité de tous les moments de la vidéo.

5. Procédé selon l'une quelconque des revendications 2 à 4, dans lequel la génération de la caractéristique de signal acoustique au premier moment en fonction de la caractéristique de signal acoustique d'état caché au premier moment comprend:

calculer la caractéristique de signal acoustique au premier moment par l'intermédiaire de:

$$m_t = FC\left(y_t\right) \quad for\, t \in \left[1, T\right],$$

où $m_t$ représente la caractéristique de signal acoustique au premier moment, $y_t$ représente la caractéristique de signal acoustique d'état caché au premier moment, *FC* () représente une fonction d'un réseau entièrement connecté, *t* représente le premier moment et *T* représente une quantité de tous les moments pour la vidéo.

6. Procédé selon l'une quelconque des revendications 1 à 5, dans lequel l'obtention (105) du résultat de prédiction de classification correspondant à la séquence de caractéristiques de signal cible comprend:

obtenir une caractéristique de signal visuel-acoustique de chaque caractéristique de signal cible dans la séquence de caractéristiques de signal cible par l'intermédiaire du troisième sous-modèle dans le modèle de prédiction, dans lequel le troisième sous-modèle comprend un modèle neuronal récurrent sur la base d'une GRU;
générer une séquence de caractéristiques de signal visuel-acoustique qui correspond à la séquence de caractéristiques de signal cible, en fonction de la caractéristique de signal visuel-acoustique de chaque caractéristique de signal cible, et;
déterminer le résultat de prédiction de classification en fonction de la séquence de caractéristiques de signal visuel-acoustique.

7. Procédé selon la revendication 6, dans lequel l'obtention de la caractéristique de signal visuel-acoustique de chaque caractéristique de signal cible dans la séquence de caractéristiques de signal cible par l'intermédiaire du troisième sous-modèle dans le modèle de prédiction comprend:

obtenir la caractéristique de signal cible au premier moment et la caractéristique de signal visuel-acoustique au deuxième moment, dans lequel le deuxième moment est antérieur et adjacent au premier moment; et
obtenir la caractéristique de signal visuel-acoustique au premier moment par l'intermédiaire du troisième sous-modèle en fonction de la caractéristique de signal cible au premier moment et de la caractéristique de signal visuel-acoustique au deuxième moment, dans lequel la caractéristique de signal visuel-acoustique au premier moment correspond à la caractéristique de signal cible au premier moment, et correspond à la caractéristique de signal visuel-acoustique au deuxième moment.

8. Procédé selon la revendication 7, dans lequel l'obtention de la caractéristique de signal visuel-acoustique au premier moment par l'intermédiaire du troisième sous-modèle comprend:

calculer la caractéristique de signal visuel-acoustique au premier moment par l'intermédiaire de:

$$H_t = GRU\left(v_t, H_{t-1}\right) \quad for \, t \in \left[1, T\right],$$

et

$$v_t = \left[h_t ; m_t\right],$$

où $H_t$ représente la caractéristique de signal visuel-acoustique au premier moment, $GRU$ () représente une fonction GRU, $H_{t-1}$ représente la caractéristique de signal visuel-acoustique au deuxième moment, $v_t$ représente la caractéristique de signal cible au premier moment, $h_t$ représente la caractéristique de signal visuel d'état caché au premier moment et $m_t$ représente la caractéristique de signal acoustique au premier moment.

9. Procédé selon la revendication 6, dans lequel la détermination du résultat de prédiction de classification en fonction de la séquence de caractéristiques de signal visuel-acoustique comprend:

calculer le résultat de prédiction de classification par l'intermédiaire de:

$$lable = \sum_{n=1}^{N} g_n a_n,$$

$$g_n = \sigma_g\left(W_g H_T + b_g\right), n \in \left[1, N\right],$$

et

$$a_n = \sigma_a\left(W_a H_T + b_a\right), n \in \left[1, N\right],$$

où *lable* représente le résultat de prédiction de classification, $g_n$ représente une fonction de représentation de porte, $a_n$ représente une fonction d'activation-représentation, $W_g$ représente une première matrice de paramètres de transformation linéaire, $W_a$ représente une deuxième matrice de paramètres de transformation linéaire, $b_g$ représente un premier vecteur de paramètres de décalage, $b_a$ représente un deuxième vecteur de paramètres de décalage, $H_T$ représente la séquence de caractéristiques de signal visuel-acoustique, $\sigma_g$ représente une fonction softmax $\sigma_a$, $N$ représente une fonction sigmoïde, $n$ représente une quantité de tous les canaux obtenus après transformation non linéaire et représente un numéro séquentiel d'un canal qui est obtenu après une transformation non linéaire.

10. Serveur comprenant:

une mémoire, et
un processeur;
dans lequel la mémoire stocke au moins une instruction, au moins un programme, un ensemble de codes ou un ensemble d'instructions; et
dans lequel ladite au moins une instruction, ledit au moins un programme, ledit ensemble de codes ou ledit ensemble d'instructions est chargé(e) et exécuté(e) par le processeur pour mettre en oeuvre le procédé selon l'une quelconque des revendications 1 à 9.

11. Support de stockage lisible par ordinateur, qui stocke au moins une instruction, au moins un programme, un ensemble de codes ou un ensemble d'instructions;
dans lequel ladite au moins une instruction, ledit au moins un programme, ledit ensemble de codes ou ledit ensemble d'instructions est chargé(e) et exécuté(e) par un processeur pour mettre en oeuvre le procédé selon l'une quelconque des revendications 1 à 9.

20

Palmtop computer

20

20

Notebook computer

10

20

Tablet computer

Mobile phone

20

Personal computer

Figure 1

Figure 2

Obtain a to-be-processed video, where the to-be-processed
video includes at least one video frame, and each video
frame corresponds to a moment

101

Obtain a sequence of visual-signal features that corresponds
to the to-be-processed video, where the sequence of visual-
signal features includes at least one visual-signal feature,
and each visual-signal feature corresponds to a moment

102

Obtain a sequence of acoustic-signal features that
corresponds to the sequence of visual-signal features, where
the sequence of acoustic-signal features includes at least one
acoustic-signal feature, and each acoustic-signal feature
corresponds to a moment

103

Generate a sequence of target-signal features, according to
the sequence of visual-signal features and the sequence of
acoustic-signal features

104

Obtain a classification predicting result corresponding to the
sequence of target-signal features, where the classification
predicting result is configured to predict a category of the
to-be-processed video

105

Figure 3

First video frame          Second video frame          Third video frame

Sixth video frame          Fifth video frame          Fourth video frame

Figure 4

20

Server

201                    202

| Obtaining module | | Generation module |

Figure 5

Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2018114458579

**Non-patent literature cited in the description**

- **KANG SUNGHUN et al.** Pivot Correlational Neural Network for Multimodal Video Categorization. *ADVANCES IN DATABASES AND INFORMATION SYSTEMS,* 09 October 2018, ISBN 978-3-319-10403-4, 402-417